# EUROPEAN PATENT SPECIFICATION

(11) **EP 2 557 132 B1**
(45) Date of publication and mention of the grant of the patent: **14.03.2018**
(21) Application number: 11177164.8
(22) Date of filing: 10.08.2011
(51) Int. Cl.: C09J 7/00, C09J 133/02, C09J 133/06, B32B 17/06

(54) **Multilayer adhesive film, in particular for bonding optical sensors**
Mehrschichtige Klebefolie, insbesondere zum Verkleben optischer Sensoren
Film adhésif multicouches, en particulier pour la liaison de capteurs optiques

(43) Date of publication of application: 13.02.2013
(73) Proprietor: 3M Innovative Properties Company, St. Paul, MN 55133-3427 (US)
(72) Inventor: Traser, Steffen, 64291 Darmstadt (DE); Forster, Jan Daniel, 52066 Aachen (DE); Kuehneweg, Bernd, 40468 Duesseldorf (DE); Pick, Tobias, 40211 Duesseldorf (DE)
(74) Representative: Gabriel, Kiroubagaranne

(56) References cited:
- EP-A1- 1 538 188
- WO-A1-2011/094385
- Sieghard Millow: "Viskosimeter Dokumentkennung RD-22-00922", Römpp Online, Version 3.36, 1 August 2008 (2008-08-01), pages 1-10, XP055077210, Retrieved from the Internet: URL:http://www.roempp.com [retrieved on 2013-08-30]
- "DIN EN ISO 2555 - Harze im fluessigen Zustand als Emulsionen oder Dispersionen - Bestimmung der scheinbaren Viskositaet nach dem Brookfield-Verfahren // Plastics - Resins in the liquid state or as emulsions or dispersions - Determination of apparent viscosity by the Brookfield Test method // PLASTIQ", DEUTSCHE NORMEN. DIN NORM,, vol. 2555, 1 January 2000 (2000-01-01), page 10pp, XP001525961,
- ALDRICH CORP GENERAL CATALOGUE: "Reference : Polymer Properties", INTERNET CITATION, 1 January 2011 (2011-01-01), pages 52-53, XP002660382, Retrieved from the Internet: URL:http://www.sigmaaldrich.com/etc/medial ib/docs/Aldrich/General_Information/therma l_transitions_of_homopolymers.Par.0001.Fil e.tmp/thermal_transitions_of_homopolymers. pdf [retrieved on 2011-09-30]

## Description

This invention relates to a multilayer pressure sensitive adhesive (PSA) film having a first acrylic pressure sensitive adhesive layer and an opposing second acrylic pressure sensitive adhesive layer as defined in claim 1. The invention furthermore relates a continuous process of forming a multilayer film comprising at least two superimposed polymer layers and to a multilayer film obtainable by the process of the present disclosure.

The multilayer PSA films of this invention can be used in many technical applications, in particular in automotive applications like the fixation of optical sensor devices like a rainsensor to a windscreen. The inventive PSA films or tapes are especially characterized in that they can be produced as transparent tapes, which is important for rain sensors acting through optical coupling of the rain sensor optical elements with the windscreen.

In recent times, rain sensors are typically fixed to vehicle windscreens by the use of adhesives, like a liquid adhesive composition or by the use of a double sided adhesive tape. A typical problem with the fixation arises from the fact that windscreens are bent in order to lower the air resistance. As a consequence, the rain sensor housing needs to have a corresponding surface. However, due to production tolerances the surface form of the sensor housing will never meet the form of the windscreen exactly. Also the application process may vary and lead to additional tolerances between sensor housing and windscreen. As a consequence, the adhesive joint is often under mechanical stress from the not perfectly matching surfaces of the substrates which may lead to a cavity formation and later on to delamination at the interfaces of the tape and the substrate surfaces. The bubble formation is optically annoying and can also lead to malfunction of an integrated rain sensor, if present.

From the prior art, many different bonding techniques are known to fix a device i.e. a rain sensor to the inner side of a vehicle windscreen. In DE 41 01 995 A1, a rearview mirror socket with an integrated rain sensor is recited, wherein the socket has a recess in which a capsule filled with an adhesive is provided. The capsule protrudes the socket surface, so that if the socket is pressed to the windscreen surfaces, the capsule bursts thus releasing the adhesive contained therein. The adhesive is cured afterwards so that the socket is fixed to the windscreen surface.

The use of a liquid adhesive may be found disadvantageous as it is difficult to keep the socket in the correct position until the adhesive is cured. Furthermore, the amount of adhesive necessary to fully cover the socket may be difficult to predict besides the risk that adhesive is spilled on undesired areas.

EP 1 104 794 A2 recites a transparent double sided adhesive tape for the fixation of a rearview mirror socket to a vehicle windscreen. The adhesive tape contains a curable resin, for example an acrylic resin. The parts to be bonded are supplied with the adhesive tape, positioned and afterwards, the adhesive is thermally cured or by radiation. Although such tapes may provide a strong joint between the bonding parts, the application method of curing the adhesive is complicated and expensive due to the addition equipment required.

Another approach is followed in EP 1 431 146 A2, in which a double sided adhesive tape is used for bonding a sensor to a surface, wherein the adhesive tape has an intermediate layer in order to level mechanical stress between the bonded parts. The additional layer may however reduce the transparency of the tape and increases also its thickness.

In EP 1 538 188 A1, a dual layer adhesive composition is recited comprising a polar and a nonpolar layer. The layers are based on acrylic adhesives of different composition having a glass transition temperature of +15 °C or less. The layers are superimposed by co-extrusion or by providing a first adhesive layer and covering this layer with the second adhesive layer from a solution. It may however be found that such an adhesive composition is not capable to compensate mechanical stress between bonded parts to a high extent without the occurrence of gas bubbles between the adhesive tape and the adjacent bonded material surfaces.

It is an object of this invention to provide a multilayer adhesive film with improved compensation capabilities regarding mechanical stress between bonded substrates. In particular, the film shall have a lower tendency for cavitation at the interfaces to the bonded parts. Furthermore, it should be possible to provide the film as a transparent adhesive tape, in particular for attaching optical sensors to a surface, especially a rain sensor optical element to the inner side of a vehicle windscreen.

This object is solved by a multilayer pressure sensitive adhesive (PSA) film having a first acrylic pressure sensitive adhesive layer and a second acrylic pressure sensitive adhesive layer, whereas the inventive film is characterized in that the first pressure sensitive adhesive layer has a glass transition temperature Tg ≥ 0 °C, a content of 40 to 90 wet.-% of co-monomer(s) having a Tg of less than 0°C in its homopolymer and a content of a strongly polar acrylate of 10 to 15 wt.-% in its precursor, and the second pressure sensitive adhesive layer has a Tg ≤ 0 °C, contains 50 to 97 wt.-% of co-monomer(s) having a Tg of less than 0°C in its homopolymer and contains 0.5 to 10 wt.-% of a strongly polar acrylate in its precursor, wherein the content of the strongly polar acrylate of the precursor of the first pressure sensitive adhesive layer exceeds the content of the strongly polar acrylate of the precursor of the second pressure sensitive adhesive layer by at least 2 wt.-% wherein the Tg of the first pressure sensitive adhesive layer exceeds the Tg of the second pressure sensitive adhesive layer by at least 5 °C, wherein the strongly polar acrylate is chosen from the group comprising acrylic acid, methacrylic acid, itaconic acid, hydroxyalkyl acrylates, or mixtures thereof, wherein the co-monomer(s) are selected from the group consisting of isooctyl acrylate, 2-ethylxhexylacrylate, isonon acrylate, isodecyl acrylate, decyl acrylate, lauryl acrylate, hexyl acrylate, butyl acrylate, and octadecyl acrylate, or combinations thereof, and wherein the Tg is measured according to the test method described in the experimental section.

It has been found that such a multilayer film shows a good adhesion to different substrates on both its major surfaces, whereas the higher acrylic adhesive side improves the adhesion of this particular side to glass surfaces. The layer having a lower acrylic content improves the stress compensation capabilities of the film and has good adhesion characteristics to polymer surfaces for example, like the rain sensor optical elements that are made of different transparent polymers e.g. Polycarbonate.

The Tg values can be determined by different methods, known to the skilled person, for example differential scanning calorimetry (DSC) or dynamic mechanical thermal analysis (DMTA) according to DIN EN ISO 6721-3, from which the latter has been used in the present invention. According to this method, Tg is determined by the 1 radian/second tan delta of the maximum temperature.

The Tg values of the first and second PSA layer may be adjusted by the content of the strongly polar acrylate for each layer in the ranges given. Acrylic acid as one possible representative of a strongly polar acrylate has as homopolymer a Tg of about 106 °C. In order to adjust the overall Tg of the first and second PSA precursors in the desired ranges, the strongly polar acrylate can be mixed with a co-monomer having a Tg of less than 0°C in its homopolymer, preferably less than - 20 °C. These co-monomers preferably carry at least one ethylenically unsaturated group and are preferably selected from acrylic acid esters. In other words, the high Tg strongly polar acrylate is mixed in such a ratio with a low Tg co-monomer that the desired Tg values are achieved. However, the present invention is not limited to this method to adjust the Tg. The skilled person may also chose alternative approaches to lower the Tg of the respective PSA formulations.

As set out above, acrylic acid esters are preferred representatives of co-monomers. The acrylic acid esters used in the present invention are preferably monofunctional acrylic esters of a monohydric alcohol having from 4 to 18 carbon atoms in the alcohol moiety. The homopolymer of these acrylic acid esters have in particular a Tg less than 0 °C or preferably less than -20 °C. Included in this class of acrylic acid esters are, selected from the group consisting of isooctyl acrylate, 2-ethylhexyl acrylate, isononyl acrylate, isodecyl acrylate, decyl acrylate, lauryl acrylate, hexyl acrylate, butyl acrylate, and octadecyl acrylate, or combinations thereof, from which isooctyl acrylate is mostly preferred.

The precursors of the first PSA layer contain 40 to 90 wt.-% of such a co-monomer(s) having a Tg of less than 0 °C, preferably less than -20 °C in its homopolymer. Regarding the second PSA layer, the precursors may-contain 50 to 97 wt.-% of such a co-monomer(s) having a Tg of less than 0 °C, preferably less than -20 °C in its homopolymer. In both cases, the remaining components comprise curing catalysts and other optional components like crosslinking agents. The exact mixing ratio between the strongly polar acrylate and the co-monomer(s) required to adjust the desired Tg can be tested with a few experiments. Alternatively, the Tg can be predicted by a calculation according to the Fox-equation.

The different Tg ranges of the PSA layers and the required difference of at least 5 °C in Tg are at least partly responsible for the before mentioned characteristics of the multilayer film. Because of the Tg value ≥ 0 °C of the first pressure sensitive adhesive layer, the hardness and resilience to pressing forces of that layer are high compared to the second PSA layer. In the same turn, this layer has a higher tension resistance, thus increases the tensile strength of the whole multilayer PSA film.

According to a preferred embodiment of this invention, in which the first and second PSA layers represent the outer adhesive layers of the multilayer film, these adhesive surfaces develop different adhesion characteristics, in particular on low and high energy substrate surfaces. These characteristics are mainly caused by the different content of the strongly polar acrylate in the first and second PSA layers but can also be influenced by other ingredients like the type of co-monomers for example.

In particular, the first PSA layer having a higher content of strongly polar acrylate develops good adhesive strength on high energy substrates like glass or (stainless) steel. The opposing second PSA layer with a lower concentration of strongly polar acrylate develops good adhesive strength on low energy surfaces like plastic materials, such as polyolefin plastics. This difference in adhesion characteristics is at least partly due to the fact that the content of the strongly polar acrylate of the precursor of the first pressure sensitive adhesive layer exceeds the content of the strongly polar acrylate of the precursor of the second pressure sensitive adhesive layer by at least 2 wt.-%.

The thickness of first PSA layer may vary over broad ranges. Although the present invention is not limited to such layer thicknesses, the first PSA layer may preferably have a thickness of 1000 µm or less, in particular 500 µm or less, more preferred 300 µm or less, most preferred 200 µm or less. The thickness may preferably range from 2 to 1,000 µm, in particular 5 to 500 µm, more preferred 10 to 300 µm, most preferred 20 to 200 µm. First PSA layers of such thicknesses provide good tension resistance and resilience to pressing forces.

In this invention, the second pressure sensitive adhesive layer has a Tg ≤ 0 °C. In other words, this layer is softer compared to the first PSA layer. As a consequence, this layer develops especially good adhesive strengths on uneven surfaces. The reason is that a softer layer has better capabilities to adapt to the bumps in the surface. At the same time, this softer PSA layer is capable to better compensate vertical and lateral physical stress than a harder layer. An explanation is that the stress forces are distributed mostly within the adhesive layer instead of being concentrated at the interface to the substrate, where they might lead to an adhesive failure.

These stress compensation characteristics and the capability to exhibit good adhesion forces on rough substrates of the second PSA layer increase with increasing film thickness. Preferably, the layer thickness of the second PSA layer is 500 µm or more, in particular at least 800 µm, more preferred at least 1000 µm, or even at least 1300 µm.

The liquid precursor of the pressure sensitive adhesive layers comprises one or more strongly polar monomers. Polarity (i. e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269 - 280.

The strongly polar acrylate is chosen from the group comprising acrylic acid, methacrylic acid, itaconic acid, hydroxyalkyl acrylates, or mixtures thereof.

In the scope of the present invention, it is preferred if the precursor of the first pressure sensitive adhesive layer has a content of the strongly polar acrylate of 10 to 13 wt.-%, in particular from 10 to 12.5 wt.-%. The resulting first PSA layer shows high resistance against stretching forces combined with good adhesion characteristics to high energy surfaces.

Regarding the precursor of the opposing second acrylic pressure sensitive adhesive layer, the content of the strongly polar acrylate is preferably 5 to 10 wt.-%, in particular from 7.5 to 10 wt.-%. These contents of strongly polar acrylate further improve the stress compensation capabilities of that layer, while keeping it solid enough to avoid deformation if heavier articles are bonded with a multilayer film having such a PSA layer.

It is further preferred, if the content of the strongly polar acrylate of the precursor of the first pressure sensitive adhesive layer exceeds the content of the strongly polar acrylate of the precursor of the second pressure sensitive adhesive layer by at least 2 to 5 wt.-%, in particular by at least 2.5 wt.-%.

In order to improve the transparency of the inventive multilayer film, the film is substantially free of filler particles, cavities in the form of microspheres, expendable microspheres, in particular pentane filled expendable microspheres or gaseous cavities, glassbeads, glass microspheres, (hydrophobic/hydrophilic) silica type fillers, fibers, electrically and/or thermally conducting particles, nano particles.

As already mentioned above, it is preferred for the inventive films if it is light-transmissive. In particular, such a film has a maximum wave-front aberration of a wave-front resulting from a planar wavefront of a wavelength of λ = 635 nm impinging normally on the outer layer opposite to the adhesive outer layer and transmitted through the multilayer film, measured as the peak-to-valley value of the transmitted wavefront, of less than 6 λ (= 3,810 nm).

The characteristics of the multilayer PSA film can also be influenced by the thickness ratio between the first and second PSA layer. According to a further preferred embodiment of the inventive multilayer film, the ratio of layer thickness of the second acrylic pressure sensitive adhesive layer to the first acrylic pressure sensitive adhesive layer ranges from 1 : 1 to 15 : 1, in particular from 3 : 1 to 10 : 1. In other words, it is preferred that the first and harder acrylic pressure sensitive adhesive layer represents a so called "skin layer" whereas the second (and softer) acrylic pressure sensitive adhesive layer represents a "core layer" with a higher thickness. The "core layer" can represent one major adhesive surfaces of the multilayer film. It has been found that such a thickness relation between harder skin and softer core does not only improve the stress resilience of such a film against shear forces for example, but also improves the peel force of the film.

Although the overall thickness of the pressure sensitive adhesive film according to this invention may vary in wide ranges, it is preferred if the thickness of the film is from 1.0 mm to 5.0 mm, especially from 1.2 to 3.0 mm. Such films may provide particularly good optical characteristics and tension force resilience.

Besides the first and second PSA layers, or the "skin layer" and "core layer" respectively, this invention also covers film constructions, in which more than two layers are present, for example further internal polymeric layers with or without PSA-characteristics, internal solid films, webs, fiber reinforcement layers and the like. This will be discussed in more detail below.

Although an inventive multilayer PSA film consisting of the first and second pressure sensitive adhesive layers is suitable for many applications, the current invention is not limited to a dual-layer film. It is for example possible that
- the first pressure sensitive adhesive layer is provided on both major surfaces of the second pressure sensitive adhesive layer or
- the second pressure sensitive adhesive layer is provided on both major surfaces of the first pressure sensitive adhesive layer.

In these embodiments, the multilayer PSA films comprise at least three layers, in which the adhesion properties of the respective multilayer films are identical on both major surfaces, namely determined either by the first or second PSA layer. The corresponding other layer is "sandwiched" inside the multilayer film with optional further inner layers. Accordingly, the inner PSA layer does not directly determine the adhesion characteristics of the film, but possibly indirectly through its influence on the mechanical properties of the multilayer film, like stretching behavior, adhesion to rough surfaces or stress compensation capabilities.

If, for example, the first pressure sensitive adhesive layer is covered on both its major surfaces with second pressure sensitive adhesive layers, such a tape shows good adhesion to high energy substrates like glass or stainless steel. The two outer first PSA layers also increase the stretching resistance of the film. At the same time, the softer core comprising the second PSA layer give the multilayer film bending flexibility and also improves the adhesion to rough surfaces compared to a tape composed of the first PSA layer alone. These characteristics are especially pronounced, if the first PSA layers are relatively thin compared to the second PSA layer: As an example, the second PSA layer may be thicker than the sum of both first PSA layers, in particular more than twice or three times the thickness. Besides these ratios, the absolute thickness of the first PSA layers may also be varied to achieve the before mentioned aims. As an example, the thickness of the first PSA layers can be 200 µm or less, in particular 100 µm or less or even 80 µm or less. The inner second PSA layer may have a thickness of at least 300 µm, or at least 500 µm, preferably from 300 to 3,000 µm, in particular from 500 to 2,000 µm.

If however the second pressure sensitive adhesive layer is covered on both its major surfaces with -layers of the first pressure sensitive adhesive the adhesion properties of the multilayer film are mainly determined by the adhesion characteristics of the second PSA layers. However, the inner first PSA layer increases the overall tensile strength of such a multilayer film which may indirectly influence the adhesion characteristics, especially if the film is subjected to pull forces in direction of or near the bond plane. Furthermore, the harder core comprising the first PSA layer gives the film more flexing stability so that it is easier to handle compared to a tape composed of the second PSA layer alone. In such a construction, the thickness of the second PSA layers can be 300 µm or more, in particular 500 µm or more. The inner first PSA layer may have a thickness from 200 to 1,000 µm, in particular from 300 to 800 µm, just to give some examples.

Besides these examples, other multilayer film constructions with at least four layers are also possible with alternating layers of the first and second PSA layers and optional other layer(s) in between.

According to another embodiment, the pressure sensitive adhesive film may comprise at least one intermediate layer present between the first and second pressure sensitive adhesive layers.

The intermediate layer can be constituted by a precursor layer which is cured during the manufacturing process of the multilayer film. Alternatively, the intermediate layer may be a solid film, a web, a mesh or the like as will be further discussed below. Such an intermediate layer may be introduced to increase the tearing resistance of the tape for example.

The PSA-film of the present invention can be produced by any known method for the preparation of multilayer films with pressure sensitive adhesive capabilities on its main surfaces. Examples are co-extrusion, lamination of the layers, preparing one layer and deposition of the further layer(s) for example by extrusion or from a solution or multilayer curtain coating.

It is however preferred to produce the inventive PSA-film by a so called "wet-in-wet" process. A further object of this invention is therefore directed to a continuous self-metered process of forming a multilayer film comprising at least two polymer layers with a first acrylic pressure sensitive adhesive layer and a second acrylic pressure sensitive adhesive layer, the process comprising the steps of:
(i) providing a substrate;
(ii) providing two or more coating knives which are offset, independently from each other, from said substrate to form a gap normal to the surface of the substrate;
(iii) moving the substrate relative to the coating knives in downstream direction,
(iv) providing curable liquid precursors of the polymers to the upstream surfaces of the coating knives thereby coating the two or more precursors through the respective gaps as superimposed layers onto the substrate;
(v) optionally providing one or more solid films and applying these essentially simultaneously with the formation of the adjacent lower polymer layer, and
(vi) curing the precursor of the multilayer film thus obtained;
wherein a lower layer of a curable liquid precursor is covered by an adjacent upper layer of a curable liquid precursor or a solid film, respectively, whereas the precursor of the first pressure sensitive adhesive layer has a content of 40 to 90 wt.-% of co-monomer(s) having a Tg of less than 0°C in its homopolymer and a content of a strongly polar acrylate of 10 to 15 wt.-%, and the precursor of the second pressure sensitive adhesive layer has a content of 50 to 97 wt.-% of co-monomer(s) having a Tg of less than 0°C in its homopolymer and a strongly polar acrylate of 0.5 to 10 wt.-%, wherein the content of the strongly polar acrylate of the precursor of the first pressure sensitive adhesive layer exceeds the content of the strongly polar acrylate of the precursor of the second pressure sensitive adhesive layer by at least 2 wt.-% and wherein after the curing step (vi) the first pressure sensitive adhesive layer has a glass transition temperature Tg ≥ 0 °C and the second pressure sensitive adhesive layer has a Tg ≤ 0 °C and the Tg of the first pressure sensitive adhesive layer exceeds the Tg of the second pressure sensitive adhesive layer by at least 5 °C, wherein the strongly polar acrylate is chosen from the group comprising acrylic acid, methacrylic acid, itaconic acid, hydroxyalkyl acrylates, or mixtures thereof, wherein the co-monomer(s) are selected from the group consisting of isooctyl acrylate, 2-ethylxhexylacrylate, isononyl acrylate, isodecyl acrylate, decyl acrylate, lauryl acrylate, hexyl acrylate, butyl acrylate, and octadecyl acryllate, or combinations thereof, and wherein the Tg is measured according to the test method described in the experimental section.

This production process is in detail described in Applicant's co-pending patent application PCT/US 2011 /022685.

A further object of this invention is a multilayer film obtainable by the inventive method. The multilayer film has pressure sensitive adhesive characteristics on one side or on both opposing sides. The multilayer film which is obtainable by the above method may in particular be provided with a liner, which is attached in step (v) of said method to the exposed surface of the top layer of the precursor of the multilayer film essentially simultaneously with the formation of such top layer.

As set out above, it is a preferred embodiment of this invention that the film is transparent. It is in particular preferred if the film is light-transmissive whereas each of the layers has a transmission of at least 80% relative to visible light wherein the multilayer film exhibits a transmission relative to visible light which is higher than the transmission of a comparative multilayer film obtained by a method differing from the above method in that the release liner is attached to the exposed surface of the top layer surface at a position downstream to the formation of the top layer of the precursor of the multilayer film.

In that context, it is especially preferred if the ratio of the transmission of the multilayer film over the transmission of the comparative multilayer film is at least 1.002.

Another object of this invention is an assembly comprising a substrate having a surface energy of at least 40 mJ/m², in particular a glass substrate, and a PSA film according to this invention, wherein the PSA film is attached to the substrate surface with its first pressure sensitive adhesive layer.

A further preferred embodiment of the inventive assembly is characterized in that when subjecting the film to stretching force mostly parallel to the substrate surface so that a 5 % elongation of the film is achieved with an stretching speed of 10 % per minute, no bubbles occur at the interface between the substrate and the film within 24h after the film is stretched to 5% elongation.

The present disclosure provides a cost-effective, stable continuous process of forming a multilayer film comprising at least two superimposed polymer layers which does not exhibit the shortcomings of the state-of-the-art processes or exhibits them to a lower extent only, respectively. The present disclosure also provides a method of forming a multilayer film which is versatile and flexible and allows for the easy manufacture of complex structures comprising at least two polymer layers. The present disclosure also provides a multilayer film optionally including a further layer which was initially included as a solid film into the curable precursor of the multilayer film.

Other objects of the present disclosure will be apparent to the person skilled in the art from the detailed specification of the disclosure provided below.

In the continuous self-metered coating process of the present disclosure, two or more curable liquid precursors of polymeric materials are coated onto a substrate and cured to provide a multilayer film comprising at least two superimposed polymer layers. The term superimposed as used above and below means that two or more of the layers of the liquid precursors of the polymers or of the polymer layers of the multilayer film, respectively, are arranged on top of each other. Superimposed liquid precursor layers may be arranged directly next to each other so that the upper surface of the lower layer is abutting the lower surface of the upper layer. In another arrangement superimposed liquid precursor layers are not abutting each other but are separated from each other by one or more liquid precursor layers and/or one or more solid films or webs.

The term adjacent as used above and below refers to two superimposed layers within the precursor multilayer film or the cured multilayer film which are arranged directly next to each other, i.e. which are abutting each other.

The terms top and bottom layers, respectively, are used above and below to denote the position of a liquid precursor layer relative to the surface of the substrate bearing the precursor layer in the process of forming a multilayer film. The precursor layer arranged next to the substrate surface is referred to as bottom layer whereas the precursor layer arranged most distantly from the substrate surface in a direction normal to the substrate surface is referred to as top layer. It should be noted that the terms top and bottom layer used above and below in conjunction with the description of the method of manufacturing the multilayer films do not have an unambiguous meaning in relation to the multilayer films as such. The term bottom layer is unambiguously defined in relation to the method of the present disclosure as the layer adjacent to the substrate of the coating apparatus. Likewise, the outer layer of the precursor of the multilayer film which is opposite to the bottom layer and which is applied last during the method is unambiguously referred to above and below as top layer. Contrary to this, when referring to the cured multilayer film as such, its two opposite outmost layers are termed above and below for clarity reasons as outer layers.

The terms superimposed and adjacent likewise apply to the cured polymer layers and the cured multilayer film, respectively.

The term precursor as used above and below denotes the material from which the polymers of the corresponding polymer layers of the multilayer film can be obtained by curing. The term precursor is also used to denote the stack of layers comprising at least two layers of liquid precursors from which the multilayer film of the present disclosure can be obtained by curing. Curing can be effected by curing with actinic radiation such as UV, γ (gamma) or e-beam radiation or by thermal curing.

The process of the present disclosure employs a substrate onto which the two or more layers of the liquid precursors are coated, and two or more coating knives which are offset independently from each other from the surface of the substrate receiving the precursor of the multilayer film, to form gaps normal to the surface of the substrate.

The direction into which the substrate is moving is referred to above and below as downstream direction. The relative terms upstream and downstream describe the position along the extension of the substrate. A second coating knife which is arranged in a downstream position relative to a first coating knife is also referred to above and below in an abbreviatory manner as downstream coating knife relative to the first (upstream) coating knife.

The coating knives useful in the present disclosure each have an upstream side (or surface), a downstream side (or surface) and a bottom portion facing the surface of the substrate receiving the precursor of the multilayer film. The gap is measured as the minimum distance between the bottom portion of the coating knife and the exposed surface of the substrate. The gap can be essentially uniform in the transverse direction (i.e. in the direction normal to the downstream direction) or it may vary continuously or discontinuously in the transverse direction, respectively.

The cross-sectional profile of the bottom portion of at least one of the coating knives in the longitudinal direction is designed so that the precursor layer is formed and excess precursor is doctored off. Such cross-sectional profile can vary widely, and it can be, for example, essentially planar, curved, concave or convex. The profile can be sharp or square, or it can have a small radius of curvature providing a so-called bull-nose. A hook-type profile may be used to avoid a hang-up of the trailing edge of the precursor layer at the knife edge.

The coating knives can be arranged essentially normal to the surface of the web, or they can be tilted whereby the angle between the web and the downstream surface of the coating knife preferably is between 50° and 130° and more preferably between 80° and 100°.

The bottom portion of the coating knife is preferably selected to extend at least across the desired width of the coating in a direction essentially normal to the downstream direction. The coating knife is preferably arranged opposite to a roll so that the substrate is passing between the transversely extending edge of the coating knife and the roller. Thus the substrate is supported by the roller so that the substrate is not sagging in a direction normal to the downstream direction. In this arrangement the gap between the coating knife and the surface of the substrate can be adjusted precisely.

If the coating knife is used in an unsupported arrangement, the substrate is held in place by its own tension but may be sagging to some extent in a direction normal to the downstream direction. Sagging of the substrate can be minimized by arranging the coating knife over a short span of the substrate between adjacent rollers. If a continuous substrate is used, sagging can be further minimized by guiding it over an endless conveyor belt. Another option to avoid/minimize sagging is guiding the substrate over a rigid surface.

The coating knives useful in the present disclosure are solid, and they can be rigid or flexible. They are preferably made from metals, polymeric materials, glass or the like. Flexible coating knives are relatively thin and preferably between 0.1 and 0.75 mm thick in the downstream direction and they are preferably made of flexible steels such as stainless steel or spring steel. Rigid coating knives can be manufactured of metallic or polymeric materials, and they are usually at least 1 mm, preferably at least 3 mm thick. A coating knife can also be provided by a continuously supplied polymer film which is tensioned and appropriately deflected by rollers, bars, rods, beams or the like to provide a transversely extending coating edge facing the substrate. If desirable, the polymer film can simultaneously be used as a release liner or as a solid film incorporated into the precursor of the multilayer film.

In the present disclosure a lower layer of a curable liquid precursor (i.e. any layer different from the top layer) is coated with an adjacent upper layer of a curable liquid precursor or a solid film, respectively, essentially from its onset. Thus, the lower curable liquid precursor layer is directly covered by the adjacent upper layer of a curable liquid precursor layer or by the solid film, respectively.

A solid film is preferably applied along the upstream side of the coating knife which also provides the lower layer of a curable liquid precursor. The film is thus attached to the upper surface of the lower layer essentially during the formation of said layer and the lower layer is not exposed. Directly depositing an upper layer of a curable liquid precursor onto the upper surface of said lower layer without exposing such upper surface of the lower layer can be accomplished by appropriately arranging the two coating knives forming the two layers. In one embodiment, the liquid precursors are applied via two coating stations abutting each other in the downstream direction whereby the back walls of the coating chambers comprise or form, respectively, the coating knives. The lower layer when formed by the corresponding coating knife is thus directly covered with the curable liquid precursor of the upper layer contained in the corresponding coating chamber. Generally the coating knife forming the upper layer needs to be arranged so that the lower layer, upon its formation at the corresponding coating knife, is essentially directly covered with the curable liquid precursor forming the upper layer.

In another embodiment, a solid film such as, in particular, a release liner is applied to the exposed surface of the top layer essentially simultaneously with the formation of such top layer. The solid film can be applied, for example, along the upstream surface of the most downstream coating knife (i.e. the back wall) of the coating apparatus. In this embodiment the solid film is smoothly attached to the exposed surface of the top layer in a snug fit thereby avoiding a compression of the top layer or the multilayer stack, respectively, or the inclusion of air between the solid film and the exposed surface of the top layer.

Although the present inventors do not wish to be bound by such theory, it is speculated that the above deposition of a solid film or of the liquid precursor forming the adjacent upper layer, respectively, onto the lower liquid precursor layer essentially simultaneously with the formation of the lower layer by means of coating knives results in multilayer films characterized by superior properties. The multilayer films of the present disclosure exhibit well-defined layers. Due to the wet in wet production, in which mostly uncured compositions are superimposed, diffusion of in particular smaller monomers like acrylic acid can occur at the interface between adjacent layers. It is further believed that the inventive PSA films develop chemical bonds extending from one layer to the adjacent layer which might possibly be even more pronounced by monomer diffusion across the interface. This might be an explanation for the strong anchorage observed between adjacent layers so that the films of the present disclosure typically exhibit a higher T-peel strength than corresponding films of the prior art obtained by co-extrusion of the corresponding layers and post-curing.

In an embodiment of the present disclosure, the precursor of the multilayer film is obtained by using a coating apparatus comprising one or more coating stations. The coating stations may comprise one or more coating chambers and, if desired, a rolling bead upstream to the most upstream coating chamber. The coating chambers each have an opening towards the substrate moving beneath the coating chambers so that the liquid precursors are applied as layers superimposed onto each other. The liquid precursor of the rolling bead is applied, for example, via the upstream surface of the most upstream coating knife.

The coating chambers each have an upstream wall and a downstream wall preferably extending essentially transversely with respect to the downstream direction. The most upstream wall of the coating apparatus is also referred to as front wall and the most downstream wall as back wall of the coating apparatus, respectively. In case two or more coating chambers are present, the downstream wall of an upstream coating chamber preferably is in an essentially abutting arrangement with the upstream wall of the adjacent downstream coating chamber. This means that the distance between the downstream wall of an upstream coating chamber and the upstream wall of the adjacent coating chamber preferably is less than 2.5 mm, more preferably less than 1 mm and especially preferably there is no distance at all between these walls. In a particular embodiment, the downstream wall of an upstream coating chamber and the upstream wall of the adjacent downstream coating chamber are integrated into one wall which is referred to above and below as an intermediate wall.

The downstream walls each comprise a coating knife facing the substrate. The coating knives are arranged above the exposed surface of the substrate onto which the liquid precursors are attached thereby providing for clearance between the bottom portion of the coating knife facing the substrate and the exposed surface of the substrate or the exposed layer of the liquid precursor or precursors attached previously, respectively. The distance between the bottom portion of the coating knife and the surface of the substrate as measured in a direction normal to the surface of the substrate is referred to above and below as gap. The liquid precursors are supplied from the coating chamber to the upstream side of the respective coating knife. The gap between the coating knife and the surface of the substrate is adjusted to regulate the thickness of the respective coating in conjunction with other parameters including, for example, the speed of the substrate in the downstream direction, the thickness normal to the substrate of the liquid precursor layers or solid films, respectively, already applied, the viscosity of the liquid precursor to be applied through the respective gap, the viscosity of the liquid precursor(s) already applied, the kind, form and profile of the coating knife, the angle with which the coating knife is oriented relative to the normal of the substrate, the position of the knife along the extension of the coating apparatus in the downstream direction and the kind of the substrate.

The coating knife can be a separate element attached to the respective downstream wall or it can form the downstream wall, respectively. It is also possible that one or more downstream walls are provided as solid films such as release films.

The knife profile can be optimized for a specific liquid precursor supplied through a coating chamber by using a rotatable coating knife device equipped with several coating knives having a different knife profile. The person skilled in the art can thus quickly change the coating knives used as back wall, front wall or intermediate walls, respectively, in the different coating chambers and evaluate the optimum sequence of coating knife profiles in a coating apparatus for manufacturing a specific multilayer film.

If the coating apparatus useful in the present disclosure comprises only one coating chamber both the upstream wall and the downstream wall of the coating chambers comprise or form, respectively, coating knives. The liquid precursor can be supplied to the upstream edge of the front wall, for example, by means of a so-called rolling bead, or it can be supplied by any kind of hopper.

If the coating apparatus of the present disclosure comprises two or more coating chambers, the front wall may or may not form a coating knife. If the front wall does not form a coating knife it may be arranged so that there is essentially no gap between the transverse extension of the bottom portion of the front wall facing the substrate and the exposed surface of the substrate so that an upstream leakage of the liquid precursor is reduced and/or minimized. If the front wall is a coating knife, the profile of its bottom portion may be formed so that an upstream leakage of the liquid precursor contained in the first upstream coating chamber is suppressed. This can be achieved, for example, by using an essentially radius type profile of the transversely extending edge of the front wall facing the substrate.

The coating cambers each have a downstream wall, an upstream wall and two or more side walls essentially extending in the downstream direction, whereby the downstream wall of an upstream chamber and the upstream wall of an adjacent downstream chamber may be integrated into one intermediate wall. The cross-section of the coating chambers in the downstream direction can vary broadly and can be, for example, square, rectangular, polygonal or regularly or irregularly curved. The downstream wall, upstream wall and/or the side walls may be present as separate elements but it is also possible, for example, that a coating chamber is formed as one piece or that the upstream walls and the side walls, for example, are formed as one piece separate from the downstream wall coating knife. It is generally preferred that the downstream wall is a separate element or piece so that the coating knives representing the downstream wall can be easily replaced, for example, by means of a revolvable coating knife device. In case the coating apparatus comprises two or more coating chambers their respective cross-sections are preferably selected that adjacent coating chambers can be arranged in an essentially abutting configuration in the downstream direction. The upstream walls and the downstream walls of the coating chambers preferably are essentially straight in the direction transverse to the downstream direction.

The extension of a coating chamber in the downstream direction, i. e. the distance between the front wall and the back wall of a coating chamber is preferably between 2 mm and 500 mm and more preferably between 5 and 100 mm. Although the present inventors do not wish to be bound by such theory. it is speculated that if the distance between the front wall and the back wall is too small the flow of the liquid precursor towards the gap tends to become instable which results in undesirable coating defects such as, for example, streaks or "brushmarks". If the distance between the front wall and the back wall of the coating chamber is too large, the continuous flow of the liquid precursor towards the gap may rupture so that the continuous coating of the moving substrate may cease and/or mixing might occur. The flow pattern in a coating chamber or trough is discussed in more detail in US 5,612,092, col. 4, In. 51 to col. 5, In. 56. This passage is incorporated by reference into the present specification.

The volume of the coating chambers is defined by their respective cross-section parallel to the surface of the substrate and their respective height normal to the surface of the substrate. The height of the coating chambers preferably is between 10 and 1,000 mm and more preferably between 25 and 250 mm. The volume of the coating chambers is preferably selected as a function of the coating width transverse to the downstream direction.

The coating chambers may be fitted with heating or cooling means so that the viscosity of the liquid precursors can be controlled and adjusted if necessary.

The liquid precursors are preferably applied under ambient pressure so that the volume flow of the precursors mainly results from the shear forces acting on the precursors as a result of the movement of the substrates and, optionally, of the solid films or webs introduced into the precursor multilayer film. The volume flow of the liquid precursors is supported by the hydrostatic pressure of the precursor comprised in the respective coating chamber. It is preferred in the method of the present disclosure that the force resulting from the hydrostatic pressure is low in comparison to the drag force or forces exerted by the moving substrate and, optionally, moving solid films. The height of the liquid precursor in a coating chamber is preferably controlled so that such height corresponds to at least the width of the coating chamber in the downstream direction throughout all of the coating process. If the height of the liquid precursor in a coating chamber is less than the width of the coating chamber in downstream direction partial mixing of the precursor applied through such coating chamber with an adjacent lower precursor layer may occur. The height of the liquid precursor in the respective coating chamber is preferably kept essentially constant.

It is also possible that the coating chambers are pressurized with air or an inert gas such as nitrogen or argon. The coating apparatus may be equipped so that the coating chambers may be pressurized separately and individually which may be desirable, for example, to counterbalance differences in viscosity between the different liquid precursors or differences in height of the liquid precursor column in the coating chambers. Preferably, the coating chambers are not completely filled with the respective liquid precursor so that the liquid precursor is pressurized via a gas atmosphere arranged on top of the liquid precursor. The total over-pressure exerted onto the respective liquid precursor is selected so that the process continues to run in a self-metered fashion, i.e. so that there is no inverse proportionality between the wet coating thickness of a precursor layer and the downweb speed of the substrate. The total over-pressure exerted onto the respective liquid precursor preferably is less than 0.5 bar and more preferably not more than 0.25 bar. In an especially preferred embodiment no gas over-pressure is applied, i.e. the process of the present disclosure is preferably run under ambient conditions.

The substrate is moved relatively to the coating knives in the downstream direction to receive a sequence of two or more layers of the liquid precursors which are superimposed onto each other in a direction normal to the downstream direction.

The substrate can be a temporary support from which the multilayer film is separated and removed subsequent to curing. When used as a temporary support the substrate preferably has a release coated surface adapted to allow for a clean removal of the cured multilayer film from the substrate. It may be desirable that the substrate when providing a temporary support remains attached to the multilayer film when winding it up, for example, for storage. This is, for example, the case if the bottom layer of the multilayer film is an adhesive layer such as a pressure-sensitive adhesive layer. The release-coated substrate protects the surface of the pressure-sensitive adhesive layer, for example, from contamination and allows the multilayer film to be wound up into a roll. The temporary substrate will then only be removed from the multilayer film by the final user when attaching the multilayer film to a surface, for example. In other embodiments where the surface of the first layer of the multilayer film facing the substrate does not need to be protected, the substrate providing a temporary support may be removed and wound up subsequent to curing the precursor layers and prior to storing the multilayer film. In another embodiment, the substrate providing a temporary support may be provided by an endless belt preferably having an exposed release surface. The multilayer film obtained after curing the stack of layers of liquid precursors separates from the endless belt and can be wound up, for example.

Alternatively, the substrate can be integrated as a layer into the resulting multilayer film. In such case, the substrate is continuously fed as a film or web and collected as a part of the multilayer film subsequent to the curing of the liquid precursor layers. The surface of the substrate may preferably be subjected, for example, to a corona treatment to enhance the anchoring of the cured bottom polymeric layer to the substrate. Anchoring of the bottom polymeric layer to the substrate may also be improved by applying a so-called tie layer onto the surface of the substrate prior to coating the bottom liquid precursor layer to the substrate. Tie layers which are suitable in the present disclosure include, for example, 3M Primer 4297, a polyamide based primer commercially available from 3M Co. or 3M Primer 4298, a primer comprising an acrylic polymer and a chlorinated polyolefin as active substances which is commercially available from 3M Co.

Substrates which are suitable both as temporary substrates or as substrates for incorporation into the multilayer film, respectively, can be selected from a group comprising polymeric films or webs, metal films or webs, woven or non-woven webs, glass fibre reinforced webs, carbon fibre webs, polymer fibre webs or webs comprising endless filaments of glass, polymer, metal, carbon fibres and/or natural fibres. Depending on the nature of the liquid precursor applied as a bottom layer onto the substrate and on whether the substrate is used as a temporary support or as an integral layer of the multilayer film, the person skilled in the art can decide without any inventive input whether a treatment of the substrate surface is required or desirable. It was found by the present inventors that the method of the present disclosure is relatively insensitive to the roughness of the exposed surface of the substrate. The surface roughness can be characterized by the arithmetic average surface roughness Rₐ which can be measured, for example, by laser profilometry. Polymeric films suitable for use in the present disclosure may have Rₐ values of, for example, 1 - 20 µm or more preferably of 1 - 10 µm whereas non-woven webs may have Rₐ values of between 10 and 150 µm and more preferably between 15 and 100 µm. The multilayer films obtainable by the method of the present disclosure exhibit, essentially independent of the surface roughness Rₐ of the substrate, a bottom polymer layer with a homogenous thickness along the extension of the web in the downstream direction. The average deviation of the thickness of the bottom polymer layer in a direction normal to the downstream direction preferably is over an arbitrarily selected distance of 10 mm less than 10 %, more preferably less than 5 % and especially preferably less than 2.5 %.

If the substrate is used as a temporary support its optionally release treated surface facing the coating knives preferably is essentially impermeable with respect to the liquid precursor applied to the substrate.

If the substrate forms an integral part of the multilayer film subsequent to curing the precursor of the multilayer film, it is also desirable that the optionally treated surface of the substrate is essentially impermeable with respect to the bottom precursor layer or that the bottom liquid precursor does at least not migrate to the opposite surface of the substrate prior to curing, respectively. In case of substrates having a certain porosity such as, for example, non-woven substrates or paper it may be desirable that the liquid precursor penetrates into the surface area into the bulk of the substrate, respectively, so that the interfacial anchorage between the first polymer layer and the surface of the substrate is improved. The penetration or migration behavior of the liquid precursor relative to a given substrate can be influenced, for example, by the viscosity of the liquid precursor and/or the porosity of the substrates.

The thicknesses of the liquid precursor layers normal to the substrate are mainly influenced by the gap between the bottom portion of the coating knife and the surface of the substrate, the respective viscosities of the liquid precursors and the downstream speed of the substrate.

Besides the liquid precursor layers provided through the recess, the thickness of the liquid precursor layers preferably is independently of each other between 25 µm and 3,000 µm, more preferably between 75 µm and 2, 000 µm and especially preferably between 75 µm and 1,500 µm. The desirable thickness of a coating layer depends, for example, on the nature of the liquid precursor and the resulting cured polymer layer.

The gap width required to provide a desired value of the thickness of the precursor layer depends on various factors such as the profile of the coating knife, the angle of the coating knife normal to the substrate, the downstream speed of the substrate, the number of layers of liquid precursors to be coated, the absolute values of the viscosities of the liquid precursors and the ratio of the absolute values of the viscosity of a specific precursor with respect to the absolute viscosity values of the liquid precursor present in adjacent layers. Generally, the gap width needs to be larger than the desired thickness of the respective layer of the liquid precursor regulated by such gap. It is disclosed, for example, in Kirk-Othmer, Encyclopedia of Chemical Technology, 4th ed., ed. by J. Kroschwitz et al., New York, 1993, vol. 6, p. 610, as a rule of thumb that the thickness of the liquid precursor layer obtained by means of a coating knife arranged normal to the substrate and having a transversely extending bottom portion with a square profile arranged in parallel to the substrate is about half the width of the gap for a wide range of substrate speeds.

The gap width is measured in each case as the minimum distance between the bottom portion of the coating knife facing the substrate and the exposed surface of the substrate. The gap is preferably adjusted to a value between 50 µm and 3,000 µm and more preferably between 100 µm and 2,500 µm.

The Brookfield viscosity of the liquid precursors at 25 °C preferably is between 100 and 50,000 mPa·s, more preferably between 500 and 30,000 mPa·s and particularly preferred between 500 and 25,000 mPa·s. If the liquid precursor comprises solid particles such as, for example, pigments or thermally and/or electrically conducting particles, the viscosity of the liquid precursor preferably is between 1,000 and 30,000 mPa·s and more preferably between 3,000 and 25,000 mPa·s.

It was found by the present inventors that liquid precursors having a lower Brookfield viscosity can be coated faster and thinner. If a layer thickness of the liquid precursor of less than 500 µm is required, the Brookfield viscosity of the liquid precursor preferably is less than 15.000 mPa·s and more preferably between 500 mPa·s and 12.500 mPa·s.

If the viscosity of the liquid precursor is less than about 100 mPa·s, the coated layer tends to get unstable and the thickness of the precursor layer may be difficult to control. If the viscosity of the liquid precursor is higher than about 50.000 mPa·s, coating of homogeneous films tends to get difficult due to high shear forces induced by the high viscosity. If the liquid precursor comprises curable monomers and/or oligomers the viscosity of the precursor may be increased in a controlled way within the ranges given above by partially polymerizing the precursor to provide a desirable coatability. Alternatively, the viscosity of the liquid precursor may be increased and adjusted by adding thixotropic agents such as fumed silica and/or polymer adds such as block-copolymers (SBRs, EVAs, polyvinylether, polyalphaolefins), silicones or acrylics. The viscosity of the liquid precursor may also be decreased, for example, by increasing the amount of curable monomers and/or oligomers.

It was found that, within a stack of liquid precursor layers, the absolute and/or relative thickness of a first upper layer of a liquid precursor having a first Brookfield viscosity at 25 °C is typically increased with increasing downstream speed of the substrate in comparison to the absolute and/or relative thickness of a second layer of a liquid precursor which is adjacent to the first layer and the precursor of which has a second Brookfield viscosity at 25 °C which is lower than that of said first precursor. The term relative thickness of a specific liquid precursor layer is defined as the ratio of the thickness of this precursor layer over the thickness of the completed stack of liquid precursor layers prior to curing, i. e. the thickness of the precursor multilayer film.

It was furthermore found that the ratio of the Brookfield viscosities of the liquid precursors of an upper liquid precursor layer and a lower, adjacent liquid precursor layer within a stack of precursor layers preferably is between 0.1 and 10 and more preferably between 0.2 and 7.5. It was found that if such ratio is outside of these preferred ranges the thicknesses of such liquid precursor layers may become inhomogenous in the downstream direction.

The downstream speed of the substrate preferably is between 0.05 and 100 m/min, more preferably between 0.5 and 50 m/min and especially preferably between 1.5 and 50 m/min. If the downstream speed of the substrate is less than 0.05 m/min the flow of the liquid precursors towards the gap becomes slow and instable resulting in coating defects. If the downstream speed of the substrate is higher than 100 m/min turbulences might occur at the interfaces between the precursor layers which may, depending on the viscosity and rheology of the precursors, result in uncontrolled mixing and/or coating defects.

It was found by the present inventors that for a specific viscosity of a liquid precursor the quality of the coating may unacceptably deteriorate if the downstream speed of the substrate is selected too high. The deterioration in quality may be reflected in the entrainment of air bubbles or in the occurrence of a streaky and nonuniform coating. The coating speed is preferably adapted so that all liquid precursor layers in a stack of such layers are coated uniformly and with a high quality, i.e. the most speed-sensitive layer determines the overall downstream speed. If the downstream speed of the substrate is selected too low, a reduction of the layer thickness may not be achievable by the reduction of the corresponding gap width only but may also require an increase of the downstream speed. It was furthermore found by the present inventors that the downstream speed of the substrate is preferably selected between the maximum and minimum values specified above. In such downstream speed interval the thickness of the liquid precursor layers is relatively insensitive to variations of the downstream speed so that the thickness of the liquid precursor layer can be majorly regulated by the gap width.

The liquid precursors suitable in the present disclosure comprise a broad range of precursors which can be cured by exposure to actinic radiation and, in particular, to UV-radiation, gamma-radiation and E-beam or by exposure to heat. The liquid precursors are preferably light-transmissive to visible light. In a preferred embodiment the precursors used in the multilayer film of the present disclosure are select so that a cured single film of the precursor having a thickness of 300 µm exhibits a transmission of at least 80 % relative to visible light (D65) as measured according to the test method specified in the test section below. The precursor used in the multilayer films of the present disclosure more preferably exhibit when present as a single 300 µm thick cured film a transmission of at least 90 % and especially preferably of at least 95 %.

The light-transmission of the multilayer film relative to visible light which results from the light transmission of the superimposed polymer layers preferably is at least 80 %, more preferably at least 85 % and especially preferably at least 90 %.

Precursors the curing of which does not include the release of low molecular weight condensate molecules such as water or alcohol molecules or includes such release only to a low amount, are usually preferred because the condensate molecules of non-exposed liquid precursor layers can typically not be fully discharged from the multilayer film.

The method of forming multilayer films of the present disclosure is highly versatile and allows for making a broad range of multilayer films with tailor-made properties.

While the present inventors do not wish to be bound by such considerations, it is speculated that the method of the present disclosure establishes a high quality laminar flow regime which is not accessible by prior art methods.

In contrast to the pre-metered die coating methods for making multilayer films which are disclosed in the prior art, the process of the present disclosure is a self-metered process wherein the flow of the liquid curable precursors mainly results from shear forces. These are provided by the substrate or the layers already attached to it moving in the downstream direction thereby exerting a drag flow onto the respective liquid precursor. Shear forces are also provided by the solid film or films, respectively, if present, moving initially along the upstream side of the coating knife towards the substrate and then, after being deflected at the transversely extending edge of the coating knife, parallel to the substrate in the downstream direction. It is believed that the volume flow resulting from these shear forces is essentially laminar and stable and that any turbulences which might occur, for example, when forming the liquid precursor layers at the respective gaps, are effectively dampened by essentially simultaneous applying the liquid precursor layers and, optionally, the solid film or films onto each other. The essentially simultaneous application of an upper adjacent liquid precursor onto a lower liquid precursor layer is preferably provided by arranging the coating knives appropriately. The essentially simultaneous application of an adjacent upper solid film, if present, is preferably provided by guiding such film along the upstream surface of the coating knife forming the lower precursor layer.

In the pre-metered die coating processes for making multilayer films, the volume flow rate that is provided by the metering pump equals the flow rate that exits the die. Therefore such flow rate is essentially constant independently of the downweb speed of the substrate so that the thickness of a precursor layer coated onto the substrate or a preceding precursor layer, respectively, is essentially inversely proportional to the downweb speed of the substrate. Contrary to that, in the self-metered coating process of the present disclosure the volume flow rate applied via the respective coating knife to the web is not constant but varies with the web speed and the wet thickness of a coated precursor layer is mainly influenced by the interactions of the liquid precursor flow with the coating apparatus of the present disclosure (cf. S.F. Kistler et al., Liquid Film Coating, loc cit., p.10, bottom of left col. and chapters 12 and 13). In the present disclosure the volume flow rate tends to increase with increasing web speed so that there is no inverse proportional relationship between the wet film thickness and the downweb speed of the substrate. The self-metered process of the present disclosure is furthermore characterized by the presence of an excess of the liquid precursors in the respective coating chambers which is metered by the coating knife to the moving web. In contrast to that pre-metered die coating processes are characterized by a constant volume flow so that what is conveyed by the pump is also applied to the moving web. Thus the self-metered process of the present disclosure is fundamentally different from the pre-metered die coating process used in the prior art.

The multilayer films obtainable by the method of the present disclosure preferably exhibit essentially homogenous properties such as, for example, an essentially homogenous thickness of the cured polymer layers in the transverse direction. It is speculated by the present inventors that the stable flow pattern established by the shear force regime of the present disclosure results in a flow history of the liquid precursors which is essentially constant over the coating width for all precursors. The average deviation of the thicknesses of the cured layers of the multilayer film in a direction normal to the downstream direction preferably is over an arbitrarily selected distance of 10 mm less than 5 %, more preferably less than 2.5 % and especially preferably less than 2 %. Due to the use of a bottleneck, the before mentioned uniformity can also be achieved with this layers of 300 µm, 200 µm, 100 µm or even thinner layers.

In the method of the present disclosure the volume flow mainly resulting from the shear force regime is mainly controlled by the gaps between the respective coating knives and the substrate, the arrangement of the coating knives relative to each other, the geometry of the bottom portion of the coating knives, the speed of the substrate and the viscosity of the curable liquid precursors. These parameters are easy to control and can be varied widely without adversely affecting the stable flow pattern which is essentially laminar and essentially homogenous in the transverse direction. In the process of the present disclosure the gaps between the respective coating knives and the substrate can be changed and adjusted in a wide range while the coating process is running. The process of the present disclosure is thus more versatile and easy to handle in comparison to the pre-metered die coating processes for multilayer stacks of wet precursor layers of the state of the art.

The method of the present disclosure provides novel multilayer films with unique properties and, in particular, with preferred optical properties such as, in particular, a high optical transmission for visible light. While the present inventors do not wish to be bound by such theory it is speculated that this is resulting from a micro-diffusion taking place at the interface between adjacent layers.

The extent of such micro-diffusion is believed to be on the one hand small enough so that it does not affect the integrity of adjacent layers. This can be demonstrated, for example, by adding a dye to one of a pair of adjacent cured layers while not adding a dye to the other cured layer. Cross-sectional microphotos from such multilayer films preferably show a sharp transition from the dyed layer to the non-dyed layer, and the interface preferably is not blurred.

The extent of such micro-diffusion is believed to be on the other hand large enough to provide a micro-gradient at the interface which results, for example, in a gradual transition between the refractive indices of adjacent layers and hence in an increased transmission. The appearance of the interface between two adjacent liquid precursor layers and hence the extent of the micro-diffusion can mainly be influenced by the viscosity of the liquid precursors of the two adjacent precursor layers. The interfacial area between two adjacent precursor layers typically is the more sharp-edged the higher the viscosity of the two liquid precursors. It is believed that interfacial micro-diffusion or micro-mixing can be enhanced by decreasing the Brookfield viscosity of at least one of the precursors of the adjacent layers to less than 5,000 mPa·s, more preferably less than 2,500 mPa·s and especially preferably to from 500 - 1,500 mPa·s. The interfacial micro-diffusion is believed to be further enhanced when the liquid precursors of both adjacent layers exhibit, independently from each other, a Brookfield viscosity of less than 5,000 mPa·s, more preferably of less than 2,500 mPa·s and especially preferably of between 500 - 1,500 mPa.s.

The micro-diffusion is also believed to increase the bonding strength between adjacent layers of the multilayer film upon curing which is reflected, for example, in improved mechanical properties such as an increased T-peel strength.

The top cured polymer layer of the multilayer film preferably exhibits an excellent finish of its exposed surface, i. e. low surface roughness as evaluated, for example, in terms of the surface roughness R_{z}.

The unique properties of the method of the present disclosure are reflected in the properties of multilayer films obtainable by such method and of assemblies comprising such multilayer films, respectively. A preferred assembly of the present disclosure comprises a light-transmissive multilayer film obtainable by the method of the present disclosure and a glass substrate. The multilayer film used in such assembly is attached through an outer adhesive layer to the glass substrate wherein the superimposed polymer layers of the multilayer film each have a transmission of at least 80% relative to visible light and wherein the refractive index of the adhesive layer is lower than the refractive index of the opposed outer layer. The transmission of the polymer layers relative to visible light is measured according to the test method specified in the test section below for cured single precursor layers having a thickness of 300 µm each. The precursor layers used in the multilayer films of the present disclosure more preferably exhibit when present as a single 300 µm thick cured film a transmission of at least 90 % and especially preferably of at least 95%. The light-transmission of the multilayer film relative to visible light which results from the light transmission of the superimposed polymer layers preferably is at least 80%, more preferably at least 85% and especially preferably at least 90%. If desired the multilayer film may comprise light-transmissive solid films such as, for example, light-transmissive polymer films or webs.

It was found that assemblies with an advantageous transmission relative to visible light are obtained if the refractive index of the outer adhesive layer attached to the glass substrate is lower than the refractive index of the opposite outer layer. This requirement is counterintuitive and it is believed to be based on the interfacial micro-diffusion described above. The glass substrate can be selected from conventional silica based glasses such as, for example, float glass but also from polymer glasses such as, for example, acrylic glass, polycarbonate glass or polyethylene terephthalate glass. The refractive index of glasses suitable in the present disclosure n_{589 nm, 23 °C} preferably is between 1.48 and 1.52.

When manufacturing the multilayer film useful in the above assembly the adhesive layer may preferably be coated as the top layer (which is attached to the surface of the glass substrate in the assembly and thus forms a non-exposed outer layer of the multilayer film) and covered, for example, with a release liner whereas the opposite outer layer is preferably coated as the bottom layer (which forms the outer layer of the assembly opposite to the adhesive layer). It is, however, also possible that the adhesive layer of the multilayer film used in the assembly is coated as the bottom layer during the method; in such case the substrate preferably is integrated into the multilayer film and forms a release liner attached to the adhesive layer. In the above assembly the difference between the refractive indices of the two outer layers (=outer layer opposite to adhesive layer and adhesive layer, respectively) preferably is less than 0.030. More preferably, the outer adhesive layer of the multilayer film has a refractive index n_{589n,23°C} which is not more than 0.0025, more preferably not more than 0.0020, especially preferably not more than 0.0015, highly preferably not more than 0.0010 and most preferably not more than 0.0008 lower than the refractive index n_{589n,23-°C} of the opposed outer layer. In such films the transmission is measured according to the test method specified in the test section below for single precursor layers having a thickness of 300 µm each. The transmission is at least 80%, more preferably at least 90% and especially preferably at least 95% for each cured layer. In a more preferred embodiment the refractive indices of precursor layers arranged between the two outer layers, if present, is larger than the refractive index of the outside adhesive layer and smaller than the refractive index of the opposite outside layer.

The method of the present disclosure furthermore allows for the incorporation of solid films such as polymeric films or webs, metal films or webs, woven or non-woven webs, glass fibre reinforced webs, carbon fibre webs, polymer fibre webs or webs comprising endless filaments of glass, polymer, metal, carbon fibres and/or natural fibres. In a coating apparatus containing one or more coating chambers such solid films can be introduced along the upstream surface of the front wall, any intermediate wall and the back wall, respectively.

If the solid film is a release liner, this may be arranged beneath the bottom precursor layer or on top of the top layer of the multilayer film to protect the exposed surfaces of the bottom and top precursor layers, respectively. A release film when included into the multilayer film as an intermediate layer between the bottom and the top polymer layer, respectively, introduces a predetermined breaking surface into the multilayer film. This can be used, for example, to prepare a stack of multilayer films in a single production process from which the individual multilayer films can be easily obtained by peeling along the release surface.

Solid films other than release liners form an integral part of the cured multilayer film. The solid films are also referred to as backing in the cured multilayer film.

In one embodiment, multilayer films of the present disclosure comprise at least two superimposed polymer layers obtainable by the method of the present disclosure wherein a release liner is applied to the exposed surface of the top layer of the precursor essentially simultaneously with the formation of such layer. This is preferably achieved by guiding and applying the release liner via the upstream surface of the most downstream coating knife, i.e. the upstream surface of the back wall of the coating apparatus. In an alternative embodiment, the back wall can be provided by the release liner which is suitably tensioned and deflected by rollers, rods, bars, beams or the like to provide a transversely extending edge facing the substrate. In this case the additional back wall can be omitted.

Since the release liner is applied to the exposed surface of the top liquid precursor layer essentially simultaneously with the formation of such layer it is smoothly attached to the top layer in a snug fit without exerting too much pressure or insufficient pressure, respectively, during the application of the liner. Since the liner is arranged in a snug fit the formation of voids between the liner and the surface of the liquid layer is essentially avoided. Likewise, since the release liner is applied along the upstream surface of the coating knife forming the liquid layer the liner is smoothly attached to the surface of the liquid layer essentially without creating turbulences in the liquid layer and the like. Therefore the problems encountered when attaching the liner to the exposed surface of a liquid layer subsequently to the formation of said liquid layer in a die-coating process of the state of the art can be widely avoided or at least diminished in the process according to the present disclosure. This is a unique advantage of the process of the present disclosure which translates into superior properties of multilayer films being obtainable by the method of the present disclosure wherein a release liner is attached to the exposed surface of the top layer of the precursor essentially simultaneously with the formation of said layer and subsequent curing. If desired the release liner can be subsequently removed.

In prior art methods of making multilayer films a release liner, if present, was typically applied to the exposed surface of the top precursor layer subsequent to the formation of such layer. In such methods the release liner was laid upon the exposed top layer using, for example, a guiding roller, bar, rod or beam. Such method requires an exact positioning of the distance between the surface of the substrate and the guiding roller which may be difficult under practical conditions. If the distance is too small too much pressure is exerted onto the top liquid precursor layer what results in a distortion of the topmost layer and in the formation of a fluid bead. The fluid bead induces a turbulent flow in the stack of liquid precursor layer so that mixing may occur. If the distance between the guiding roller and the substrate is too large, air-entrapment may occur between the release liner and the exposed surface of the top liquid precursor layer. This results in a poor surface finish of the cured topmost layer of the multilayer film characterized by high R_{z} values. Also, curing of the topmost surface may be oxygen-sensitive. If the top liquid precursor layer comprises, for example, the precursor of an acrylate based pressure-sensitive adhesive, UV curing of such precursor will be impeded by the presence of oxygen so that an insufficient curing and hence distinctly diminished properties of the pressure-sensitive adhesive layer may occur.

When applying a release liner to the exposed surface of the top precursor layer via an appropriate roller, bar, rod, bead or the like arranged downstream to the downstream surface of the back wall, the exposed surface of the top layer is exposed to the ambient atmosphere in the distance between the back wall and such downstream coating knife which may result in a degradation of the top layer.

It was surprisingly found that cured light-transmissive multilayer film of the present disclosure which are obtainable by attaching a release liner to the exposed surface of the top layer of the precursor essentially simultaneously with the formation of such layer with subsequent curing, exhibit improved optical properties such as, in particular, a higher transmission in comparison to a corresponding multilayer film obtained by attaching a release liner to the stack of liquid precursor layers subsequently to the formation of the top precursor layer, for example, via an appropriate roller or bar knife in an open face distance in downstream direction from the downstream surface of the back wall of the coating apparatus. Hence the multilayer films of the present disclosure which are obtainable by attaching a release liner to the exposed surface of the top layer of the precursor essentially simultaneously with the formation of such layer with subsequent curing, are preferred.

The ratio of the transmission of the multilayer film obtainable by attaching a release liner to the exposed surface of the top layer of the precursor essentially simultaneously with the formation of such layer, i.e., for example, along the inner surface of the most downstream coating knife, over the transmission of a corresponding multilayer film obtained by subsequently applying a release layer in an open face distance in a downstream direction to where the top layer is formed is at least 1.002, more preferably at least 1.003 and especially preferably at least 1.005.

It was more specifically found by the present inventors that multilayer films of the present disclosure obtainable by curing a precursor wherein a release liner is applied to the exposed surface of the top layer of the precursor essentially simultaneously with the formation of such top layer with subsequent curing, exhibit advantageous properties in comparison to
(i) laminated multilayer films obtained by laminating the corresponding cured precursor layer upon each other;
(ii) multilayer films obtained by the die-coating method of the prior art (disclosed, e.g., in US 4,894,259/Kuller) where the release liner is attached to the exposed surface of the top layer surface at a position downstream to the most downstream coating knife, i.e. in an open face distance;
(iii) multilayer films obtained where the release liner is attached to the exposed surface of the top layer surface at a position downstream to the most downstream coating knife, i.e. in an open face distance; and
(iv) multilayer films obtained by applying one or more liquid precursor layers to one or more cured precursor films or one or more laminates of such precursor films with subsequent curing, irrespective of whether the release liner (if applied) was attached via the upstream surface of the back wall or an additional downstream coating knife.

It was also found, for example, that the light transmission for visible light of the multilayer of the present disclosure with a release liner applied to the top precursor layer essentially simultaneously with its formation is higher than the light transmission for visible of the corresponding multilayer films as defined in (i) to (iv). It was furthermore found, for example, that the multilayer film of the present disclosure with a release liner applied via the upstream surface of the back wall exhibits a higher mechanical stability and, in particular, a higher T-peel strength than the corresponding multilayer films as defined in (i) and (iv) above.

The liquid precursors suitable in the present disclosure preferably comprise at least one compound having a radiation curable ethylene group. In a preferred embodiment, the radiation curable ethylene group is a (meth)acrylate group. In another preferred embodiment, the radiation curable ethylene group is a mono-and/or poly(meth)acrylate functional oligomer compound comprising at least one urethane bond. The term "oligomer" as used above and below refers to relatively low molecular weight polymeric compounds. Poly(meth)acrylate functional oligomer compounds comprising at least one urethane bond preferably have a weight average molecular weight M_{w} between 500 and 35,000 and more preferably of between 1,000 and 30,000. Such oligomeric compounds are typically liquid at room temperature and ambient pressure whereby the Brookfield viscosity is preferably less than 500 Pa·s and more preferably less than 200 Pa·s at 25 °C.

The liquid precursor of the present disclosure preferably is essentially solvent-free, i.e. it does essentially not comprise any non-reactive solvents such as, for example, methanol, acetone, dimethylsulfoxide, or toluene. It is, however, possible though not preferred that the precursor comprises small amounts of one or more of such non-reactive solvents of preferably less than 2 pph and more preferably of less than 1 pph with respect to the mass of the precursor in order to lower the viscosity of the liquid precursor.

A preferred liquid precursor suitable in the present disclosure is curable to a pressure-sensitive adhesive. Especially preferred is a (meth)acrylate-based pressure-sensitive adhesive.

The liquid precursor of the (meth)acrylate based pressure sensitive adhesive comprises one or more alkyl (meth)acrylates, i. e. one or more (meth)acrylic acid alkyl ester monomers. Useful alkyl (meth)acrylates include linear or branched monofunctional unsaturated (meth)acrylates of non-tertiary alkyl alcohols, the alkyl groups of which have from 4 to 14 and, in particular, from 4 to 12 carbon atoms. Examples of these lower alkyl acrylates which are useful in the liquid precursor of (meth)acrylate based adhesives include n-butyl, n-pentyl, n-hexyl, cyclohexyl, iso-heptyl, n-nonyl, n-decyl, isohexyl, isobornyl, 2-ethyloctyl, isooctyl, 2-ethylhexyl, tetrahydrofurfuryl, ethoxyethoxyethyl, phenoxyethyl, cyclic trimethlypropane formal, 3,3,5-trimethylcyclohexyl, t-butylcyclohexyl, t-butyl acrylates and methacrylates. Preferred alkyl acrylates include isooctyl acrylate, 2-ethylhexyl acrylate, n-butylacrylate, tetrahydrofurfuryl acrylate, isobornyl acrylate, ethoxyethoxyethyl acrylate, phenoxyethyl acrylate, 3,3,5-trimethylcyclohexyl acrylate,and cyclohexyl acrylate. Particularly preferred alkyl acrylates include isooctyl acrylate and tetrahydrofurfuryl acrylate. Particularly preferred alkyl methacrylates include butyl methacrylate, cyclohexyl methacrylate, and isobornyl methacrylate.

The liquid precursor of the (meth)acrylate based pressure sensitive adhesive preferably comprises up to 5 and, in particular, 1 - 4 (meth)alkyl acrylates. The amount of the alkyl acrylate compounds with respect the total mass of (meth)acrylate functionalized monomers, oligomers and/or polymers with the exception of crosslinkers preferably is at least 75 wt. %, more preferably at least 85 wt. % and especially preferably between 85 and 99 wt. %.

The liquid precursor of the (meth)acrylate based pressure sensitive adhesive may furthermore comprise - besides the strongly polar monomer - one or more moderately polar polar monomers. Polarity (i. e., hydrogen-bonding ability) is frequently described by the use of terms such as 'strongly', 'moderately', and 'poorly'. As already set out above, references describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269 - 280. Examples for strongly polar monomers are acrylic acid, methacrylic acid, itaconic acid, hydroxyalkyl acrylates, acrylamides and substituted acrylamides while, for example N-vinyl pyrrolidone, N-vinyl caprolactam, acrylonitrile, vinylchloride, diallyl phthalate and N,N-dialkylamino (meth)acrylates are typical examples of moderately polar monomers. Further examples for polar monomers include cyano acrylate, fumaric acid, crotonic acid, citronic acid, maleic acid, β-carboxyethyl acrylate or sulfoethyl methacrylate. The alkyl (meth)acrylate monomers enumerated above are typical examples of relatively poorly polar monomers. The amount of more moderately polar and/or strongly polar monomers preferably is not too high and, in particular, does not exceed 25 wt. % with respect to the total mass of meth)acrylate functionalized monomers, oligomers and/or polymers with the exception of crosslinkers.

The liquid precursor of the (meth)acrylate based pressure sensitive adhesive may furthermore comprise one or more monomers like mono- or multifunctional silicone (meth)acrylates. Exemplary silicone acrylates are Tego Rad products from the Evonik company, Germany, methacryyloxyurea siloxanes or acrylamidoamido siloxanes.

Ethylenically unsaturated partly- or perfluorinated mono- or oligomers may also be part of the formulation of the liquid precursor. Examples are the perfluoropolyether acrylate Sartomer CN 4001, available from Sartomer Company Inc, or the F-oligomer II, synthesized as detailed I the "List of materials used" below.

The liquid precursor of the (meth)acrylate based pressure sensitive preferably comprises one or more crosslinkers in an amount effective to optimize the cohesive or inner strength of the cured pressure sensitive adhesive. Useful crosslinkers for use in the liquid precursor of the (meth)acrylate based pressure sensitive include, for example, benzaldehyde, acetaldehyde, anthraquinone, various benzophenone-type and vinyl-halomethyl-s-triazine type compounds such as, for example, 2,4-bis(trichloromethyl)-6-(4-methoxyphenyl)-s-triazine. Preferred are polyacrylic-functional monomers such as, for example, trimethylolpropane triacrylate, pentaerythritol tetraacrylate, 1,2-ethylene glycol diacrylate, tripropyleneglycol diacrylate, 1,6-hexanediol diacrylate or 1,12-dodecanediol diacrylate. The compounds listed above, which can be substituted or unsubstituted, are intended to be illustrative and by no means limitative. Other useful crosslinkers which could be used are thermal crosslinkers. Exemplary thermal crosslinkers include: melamine, multifunctional aziridiens, multifunctional isocyanates, di-carbonic acids/carbonic acid anhydides, oxazoles, metalchelates, amines, carbodiimides, oxazolidones, and epoxy compounds. Hydroxyfunctional acrylates such as 4-hydroxybutyl (meth)acrylate or hydroxyethyl (meth)acrylate can be crosslinked, for example, with isocyanate or amine compounds.

Hydrolyzable, free-radically copolymerizable crosslinkers, such as monoethylenically unsaturated mono, di- and trialkoxy silane compounds including, but not limited to, methacryloxypropyltrimethoxysilane, vinyldimethylethoxysilane, vinylmethyldiethoxysilane, vinyltriethoxysilane, vinyltrimethoxysilane, vinyltriphenoxysilane, and the like are also useful crosslinking agents.

Aside from thermal, moisture or photosensitive crosslinking agents, crosslinking may achieve using high energy electromagnetic radiation such as gamma or e-beam radiation.

The crosslinking compounds are preferably present in an amount of 0.01 to 10 pph, in particular, between 0.01 and 5 pph and very specifically between 0.01 and 3 pph.

The liquid precursor of the (meth)acrylate based pressure sensitive preferably comprises one or more photoactivatable polymerization initiators such as, for example, benzoin ethers (e.g., benzoin methyl ether, benzoin isopropyl ether, substituted benzoin ethers such as anisoin methyl ether), acetophenones (e.g., 2,2-diethoxyacetophenone), substituted acetophenones such as 2,2-diethoxyacetophenone, 2,2-dimethoxy-2-phenyl-acetophenone, and 1-phenyl-2-hydroxy-2-methyl-1-propanone, substituted alpha-ketols (e.g., 2-methyl-2-hydroxy-propiophenone), aromatic sulphonyl chloride, and photoactive oximes such as 1-phenyl-1,1-propane-dione-2-(O-ethoxycarbonyl) oxime and/or thermally activatable initiators such as, for example, organic peroxides (e.g., benzoyl peroxide and lauryl peroxide) and 2,2'-azobis(isobutyronitrile). The liquid precursor preferably comprises between 1-3 and, in particular, between 1-2 photonitiator compounds; especially preferred are liquid precursors comprising only one photoinitiator compound. The photoinitiator compounds are preferably present in an amount of 0.01 - 2.00 pph, in particular, between 0.05 - 1.00 pph and very specifically between 0.1 - 0.5 pph.

The liquid precursor of the (meth)acrylate based pressure sensitive may comprise other components and adjuvents such as tackifiers, plasticizers, reinforcing agents, dyes, pigments, light stabilizing additives, antioxidants, fibers, electrically and/or thermally conducting particles, fire retardants, surface additives (flow additives), rheology additives, nanoparticles, degassing additives, glass bubbles, polymeric bubbles, beads, hydrophobic or hydrophilic silica, calcium carbonate, blowing agents, reinforcing and toughening agents.

The liquid precursor of the (meth)acrylate based pressure sensitive is preferably prepared by adding part of the photoinitiator compounds to a monomer mixture comprising the alkyl (meth)acrylate monomers and the moderately polar and/or strongly polar monomers and partially polymerizing such mixture to a syrup of a coatable viscosity of, for example, 300 - 35,000 mPa·s (Brookfield, 25 °C). The viscosity of the resulting precursor is further adjusted by adding the other compounds such as crosslinker compounds, the remainder of the photoinitiator compounds, silicone (meth)acrylates and any additives and adjuvants as may be used. The viscosity of the resulting precursor can also be adjusted by adding a small amount of typically less than 5 pph of a polymeric additive such as, for example, reactive, photopolymerizable polyacrylates. The partial polymerization of the monomer mixture is preferably carried out with appropriate UV lamps having at a wavelength between 300 - 400 nm with a maximum at 351 nm at an intensity of preferably between about 0.1 to about 25 mW/cm². The exposure preferably is between 900-1,500 mJ/cm². The polymerization may be stopped either by removal of the UV and/or the introduction of, for example, radical scavenging oxygen. An example of a suitable UV-curing station is decribed in connection with the coating apparatus described in the Examples below.

Another preferred liquid precursor suitable in the present disclosure is UV-curable and comprises at least one ethylenically unsaturated compound comprising at least one urethane bond. Such compounds preferably are monomers or oligomers, and/or at least one of the ethylenically unsaturated groups preferably is a (meth)acrylate group. Such precursor can be polymerized to a polyurethane acrylate polymer, i. e. to a polymer comprising urethane bonds. Especially preferred is a liquid precursor comprising one or more mono- and/or multi(meth)acrylate functional monomer or oligomer compounds comprising at least one urethane bond, one or more monomer compounds comprising one or more ethylenically unsaturated groups but no urethane bond and one or more photoinitiators.

Mono- and multi- (meth)acrylate functional oligomers comprising at least one urethane bond are commercially available, for example, from Rahn AG, Zurich, Switzerland under the GENOMER trade designation. GENOMER 4188 is a mixture consisting of 80 wt. % of a monoacrylate-functional polyester based oligomer comprising at least one urethane bond, and 20 wt. % of 2-ethylhexyl-acrylate; the oligomer comprised by GENOMER 4188 has a weight average molecular weight M_{w} of about 8,000 and the average acrylate functionality is 1 ± 0.1. GENOMER 4316 is an aliphatic trifunctional polyurethane acrylate characterized by a viscosity of 58,000 mPas at 25 °C and a glass transition temperature Tg 4 °C. GENOMER 4312 is an aliphatic trifunctional polyester urethane acrylate characterized by a viscosity of 50,000 - 70,000 mPas at 25 °C.

The mono- -or multi-(meth)acrylate functional oligomer compounds each have at least one, preferably at least 2 and more preferably at least 4 urethane bonds.

Mono- and multi-(meth)acrylate functional oligomers and their preparation are disclosed on p. 4, In. 24 - p. 12, In. 15 of WO2004/000,961 which passage is herewith incorporated by reference.

The amount of the one or more mono- or multi-(meth)acrylate functional oligomers comprising at least one urethane bond with respect to the total mass of meth)acrylate functionalized monomers, oligomers and/or polymers with the exception of crosslinkers preferably is from 30 - 97.5 wt. % and more preferably from 45 - 95 wt. %.

The liquid precursor of the polyurethane polymer suitable in the present disclosure furthermore preferably comprises one or more monomer compounds comprising one or more ethylenically unsaturated group but no urethane bond. Examples of suitable ethylenically unsaturated groups include vinyl, vinylene, allyl and, in particular, (meth)acrylic groups. The amount of such compounds with one or more ethylenically unsaturated group total mass of (meth)acrylate functionalized monomers, oligomers and/or polymers with the exception of crosslinkers preferably is from 2.5 - 70 wt. % and more preferably from 5 - 55 wt. % .

Compounds with one or more (meth)acrylic groups can preferably be selected from the poorly polar alkyl (meth)acrylate monomers, the moderately polar and/or strongly polar monomers and the two- or higher acrylic group functional crosslinkers disclosed above in connection with the liquid precursor of the acrylate-based pressure-sensitive adhesive.

The liquid precursor of the polyurethane polymer preferably comprises one or more (meth)acrylate monofunctional compounds having a glass transition temperature of the corresponding homopolymer of less than 10 °C. Preferred examples of such monomers include n-butyl acrylate, isobutyl acrylate, hexyl acrylate, 2-ethylhexyl acrylate, isooctyl acrylate, caprolactone acrylate, isodecyl acrylate, tridecyl acrylate, lauryl methacrylate, methoxy-polyethylenglycol-monomethacrylate, lauryl acrylate, tetrahydrofurfuryl acrylate, ethoxy-ethoxyethyl acrylate and ethoxylated-nonyl acrylate. Especially preferred are 2-ethylhexyl acrylate, isooctyl acrylate and tetrahydrofurfuryl acrylate.

The liquid precursor of the polyurethane polymer preferably comprises one or more (meth)acrylate monofunctional compounds having a glass transition temperature of the corresponding homopolymer of 50 °C or more. Preferred examples of such monomers include acrylic acid, N-vinylpyrrolidone, N-vinyl caprolactam, isobornyl acrylate, acryloylmorpholine, isobornyl methacrylate, phenoxyethyl acrylate, phenoxyethyl methacrylate, methylmethacrylate and acrylamide. Especially preferred areacrylic acid, isobornyl acrylate and N-vinyl caprolactam.

Examples of compounds with two or more ethylenically unsaturated groups which are suitable in the curable liquid precursor of the polymer comprised in the layer or layers of the multilayer film of the present disclosure include C₂ - C₁₂ hydrocarbondiol diacrylates such as 1,6-hexanediol diacrylate, C₄ - C₁₄ hydrocarbon divinylethers such as hexanediol divinylether and C₃ - C₁₂ hydrocarbontriol triacrylates such as trimethylolpropanetriacrylate. Two or higher acrylate functional monomers and, in particular, two- or three acrylate-functional monomers are preferred.

The liquid precursors described above are to exemplify the present disclosure without limiting it.

In another preferred embodiment, light-transmissive multilayer films according to the present disclosure comprise at least two superimposed polymer layers wherein one of the outer layers of the multilayer film comprises a polyurethane polymer and the opposite outer layer of the multilayer film comprises an adhesive and more preferably a (meth)acrylate based pressure-sensitive adhesive. Such multilayer film has a maximum wave-front aberration of a wavefront resulting from a planar wavefront of a wavelength of λ = 635 nm impinging normally on the top layer and transmitted through the multilayer film, measured as the peak-to-valley value of the transmitted wavefront, of less than 6 λ (= 3,810 nm).

The value of the maximum aberration of a planar wavefront measured subsequent to its transmission through a multilayer film of the present disclosure characterizes the distortion the wavefront experiences as a result of its interaction with the multilayer film. The lower the value of the maximum wavefront aberration the higher the optical quality of the film (e.g. less distortions of an image projected through the film).

The current invention is described in more detail with the following examples and figures. The figures show in
- *Fig. 1*: a schematic cross-sectional representation of a coating apparatus to carry out the inventive method, and
- *Fig. 2*: a schematic cross-sectional view of an assembly with a double-sided dual-layer PSA film on a glass substrate bonded to a polymeric surface.

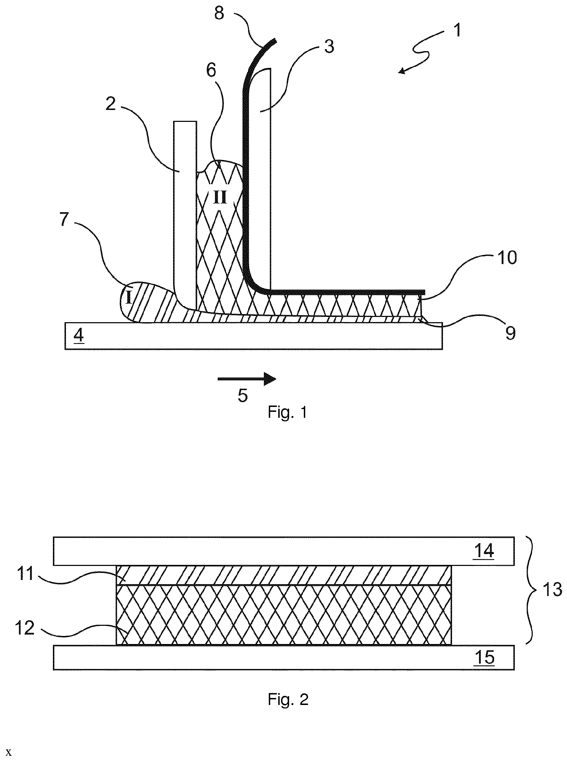

In Fig. 1, a coating apparatus 1 is shown with which the inventive method is carried out. The coating apparatus 1 comprises two coating knives 2, 3 which are offset from a substrate 4 in the form of a (bottom) release liner, thus forming gaps between the respective bottom portions of the coating knives 2, 3 and the substrate 4. The substrate 4 is moved in a downstream direction 5 relatively to the coating apparatus 1 as indicated by an arrow. The coating knives 2, 3 are vertically arranged, spaced apart and held independently from each other and can be moved in a vertical direction to change the gap width to the substrate 4. The coating knives 2, 3 can further be moved relatively to each other in a lateral direction in order to modify the lateral distance between the coating knives 2, 3.

The lateral spaces between adjacent coating knives 2, 3 define a coating chamber 6 in which an acrylic liquid precursors II is provided under ambient pressure to yield a precursor layer 10. The liquid precursor II develops pressure sensitive adhesive characteristics after UV curing and represents a core layer 12 of a dual layer PSA film of this invention. The cured precursor of the layer 10 has a Tg < 0 °C and contains 5 to 10 wt.-% of a strongly polar acrylate.

The front wall and the back wall of the coating chamber 6 are defined by the respective adjacent coating knives 2, 3. A second liquid precursor I is provided in front of the upstream coating knife 2 as a rolling bead 7 to yield a precursor layer 9. The liquid precursor I is an acrylic precursor developing pressure sensitive adhesive characteristics after UV curing and representing a skin layer 11 of a dual layer PSA film of this invention. The precursor of the layer 9 has a content of a strongly polar acrylate of 7.5 to 15 wt.-% and in the cure state a glass transition temperature Tg > 0 °C. The acrylate content of the precursor 9 of the skin layer exceeds the acrylate content of the precursor 10 of the core layer by at least 2 wt.-%, wherein the Tg of the cured layer 9 exceeds the Tg of the cured layer 10 by at least 5 °C

In the coating chamber 6, a solid film 8 in the form of a release liner of 75 µm thickness is conveyed on the upstream side of the coating knife 3 essentially simultaneously with the curable liquid precursor II.

By moving the substrate 4 relatively to the coating apparatus 1 in the downstream direction 5, the liquid precursors I, II are deposited onto the substrate 4 in a self-metered manner and superimposed on one another in the order of the arrangement of the liquid precursors I, II to form the precursor layers 9, 10, which are top-covered by the release liner 8. The gap between the first coating knife 2 and the substrate 4 is such that the precursor layer 9 has a thickness of about 80 to 100 µm. The offset between the coating knives 2, 3 is adjusted in such a way that the precursor layer 10 achieves a thickness of about 1400 µm.

The multilayer film is then cured in a UV-curing station to yield a dual-layered double-sided pressure sensitive adhesive tape with a relatively soft core layer 12 and a harder skin layer 11.

Fig. 2 shows an inventive assembly 13 comprising a dual-layered double-sided pressure sensitive adhesive film of this invention with its first acrylic pressure sensitive adhesive skin-layer 11 being bonded to a glass substrate 14, in particular the inner side of a vehicle windscreen. The acrylic pressure sensitive adhesive core layer 12 is bonded to a polymeric substrate 15, like a socket of a rearview mirror.

### Test Methods Used

### Brookfield Viscosity

The viscosity of the liquid precursors was measured at 25 °C according to DIN EN ISO 2555:1999 using a Brookfield Digital Viscosimeter DV-II commercially available from Brookfield Engineering Laboratories, Inc.

### Test samples:

Different test substrates were used for testing.

### a) Glass substrate:

Floatglass air side (commercially available from Rocholl GmbH) glass panels having a dimension of 150 mm x 50 mm x 3 mm

Prior to testing the glass panels were cleaned according to the following described procedure. First the glass panels were wiped twice with a 1: 1 mixture of isopropyl alcohol and distilled water and then thereafter dried with a paper tissue.

### b) Stainless steel substrate:

Test panels according to EN1939:20, surface 1.4301 mirror-like (commercially available from Rocholl GmbH) having a dimension of 150 mm x 50 mm x 2 mm

Prior to testing the stainless steel panels were cleaned according to the following described procedure. First the stainless steel panels were wiped once with MEK and thereafter dried with a paper tissue.

### c) Aluminum T-Blocks: AlMg3 (Int. 5754) T-Profile, dimension of 25 mm x 25 mm and a height of 25 mm with 7 mm wide drilled hole; material thickness 3 mm

The aluminum T-Blocks were cleaned as follows. First the T-Blocks were once wiped with MEK and thereafter once with a 1:1 mixture of isopropyl alcohol and distilled water. Drying was done using a paper tissue.

### 90°-Peel-test @ 300 mm/min (according to Test Method FINAT TM 2)

Test specimen having a width of 12.7 mm and a length >120 mm were cut out of the test sample material in the machine direction. The liner was then removed from each test specimen and the test specimen applied onto the test panel (glass and stainless steel) using light finger pressure. Using a standard FINAT test roller (weight 6.8 kg) at a speed of approximately 10 mm per second the test samples were then rolled over in order to obtain intimate contact between the adhesive mass and the test panel surface. After applying the test specimens to the test panels, test samples were allowed to dwell for a period of 72 h at ambient room temperature (23 °C +/- 2 °C and 50 % +/- 5 % relative humidity) before testing. Peel testing was then performed at a machine speed of 300 mm per minute. Test results were expressed in Newton per 10 mm. The quoted peel values are the average of three 90°-peel measurements.

### T Block-Test

The test was carried out at ambient room temperature (23 °C +/- 2 °C and 50 % +/- 5 % relative humidity) The cleaned aluminum T-Block test surface was prepared by treating it with a commercially available 3M Primer P94 to avoid pop-off aluminum failures during testing. The liner was then removed from one side of the test specimen .A first aluminum T-Block was then brought onto the exposed adhesive surface of the test specimen and the overstanding adhesive was cut at the edges of the aluminum T-Block. The liner on the other side of the test specimen was thereafter removed and a second, in the same way cleaned and primered aluminum T-Block was brought onto the open adhesive surface and overstanding edges cut off. A force of 110N +/- 5N for 15 seconds was then applied onto the prepared test sample. After a dwell time of 24 hours at ambient room temperature (23 °C +/- 2 °C and 55 % +/- 5 % relative humidity) the test sample was tested in a Zwick tensile tester by performing a tensile test at 51 mm/min.

The results were expressed in N/cm² and in mm for the elongation at the first force maximum.

### Static Shear-Test (according to FINAT TM 8)

The test was carried out at ambient room temperature (23 °C +/- 2 °C and 50 % +/- 5 % relative humidity). Test specimens were cut having a dimension of 12.7 mm by 25.4 mm. The liner was then removed from one side of the test specimen and the adhesive was adhered onto a small stainless steel panel (mirror-like polished, dimensions 1 mm x 30 mm x 50 mm with one 5 mm diameter hole positioned 5 mm from one short edge). The second liner was thereafter removed from the test specimen and the small panel with the test specimen was applied onto a stainless steel panel having the following dimensions: 50 mm x 100 mm x 2 mm at the short edge. A 1000 g weight was then put onto the sandwich construction for 15 minutes. Each sample was then placed into a vertical shear-stand (+2° disposition) with automatic time logging and a 750g weight was then hung into the hole of the smaller stainless steel panel. The time until failure was measured and recorded in minutes. Target value was 10.000 minutes. Per test specimen three samples were measured.

### Glass Transition Temperature (Tg) (according to DIN EN ISO 6721-3)

The Tg values were measured according to the DMA (Dynamic Mechanical Analysis) by tan delta determination as a function of temperature.

DMA Machine settings were as follows:
Parallel Plates with fixed steel plates with a diameter of 8 mm
Temperature ramp test from -80 °C up to +150 °C
Heating rate: 2 °C/min
Frequency: 1 Hz
Strain: 1 % (Auto Strain adjustment on with max 4 %)
AutoTension adjustment: on
AutoTension direction: compression
AutoTension sensitivity: 0.1 N

The Tg values were graphically determined with an accuracy of +/- 2 °C.

### List Of Materials Used

Isooctyl acrylate (IOA), ester of isooctylalcohl and acrylic acid, commercially available from Sartomer Company (CRAY VALLEY), France.

Acrylic acid (AA), commercially available from BASF AG, Germany.

1,6-Hexanediol diacrylate (HDDA), fast curing diacrylate monomer, commercially available form Sartomer (CRAY VALLEY), France.

Omnirad BDK, 2,2-dimethoxy-2-phenylacetophenone (UV-initiator), commercially available from iGm resins, Waalwijk, The Netherlands.

### Examples

For each formulation a liquid precursor was prepared as follows.

For the skin-layer 11, a liquid precursor LPS-1 was prepared by combining 95 wt.-% of isooctyl acrylate and 5 wt. % of acrylic acid with 0.04 pph of Omnirad BDK as a photoinitiator in a glass vessel and stirring for 30 minutes. The mixture was partially polymerized under a nitrogen-rich atmosphere by UV radiation to a degree of polymerization of appr. 8 % and a Brookfield viscosity of appr. 3,000 mPa·s at 25 °C. Subsequent to the curing 0.10 pph of 1,6-hexanediol diacrylate as a crosslinker and 0.16 pph of Omnirad BDK as a photoinitiator were added and the resulting mixture was thoroughly stirred for 30 minutes to provide liquid precursor LPS-1.

Another liquid precursor LPS-2 was prepared for the skin layer 11 by combining 87,5 wt. % of isooctyl acrylate and 12,5 wt. % of acrylic acid with 0.04 pph of Omnirad BDK as a photoinitiator in a glass vessel and stirring for 30 minutes. The mixture was partially polymerized under a nitrogen-rich atmosphere by UV radiation to a degree of polymerization of appr. 8 % and a Brookfield viscosity of approximately 3,000 mPa·s at 25 °C. Subsequent to the curing 0.10 pph of 1,6-hexanediol diacrylate as a crosslinker and 0.16 pph of Omnirad BDK as a photoinitiator were added and the resulting mixture was thoroughly stirred for 30 min. to provide liquid precursor LPS-2.

For the core-layer 12, a liquid precursor LPC-1 was prepared combining 95 wt. % of isooctyl acrylate and 5 wt. % of acrylic acid with 0.04 pph of Omnirad BDK as a photoinitiator in a glass vessel and stirring for 30 minutes. The mixture was partially polymerized under a nitrogen-rich atmosphere by UV radiation to a degree of polymerization of appr. 8 % and a Brookfield viscosity of appr. 3,000 mPa·s at 25 °C. Subsequent to the curing 0.12 pph of 1,6-hexanediol diacrylate as a crosslinker and 0.16 pph of Omnirad BDK as a photoinitiator were added and the resulting mixture was thoroughly stirred for 30 minutes to provide liquid precursor LPC-1.

Another liquid precursor LPC-2 was prepared for the core-layer 12 by combining 92,5 wt. % of isooctyl acrylate and 7,5 wt. % of acrylic acid with 0.04 pph of Omnirad BDK as a photoinitiator in a glass vessel and stirring for 30 minutes. The mixture was partially polymerized under a nitrogen-rich atmosphere by UV radiation to a degree of polymerization of appr. 8 % and a Brookfield viscosity of approximately 3,000 mPa·s at 25 °C. Subsequent to the curing 0.12 pph of 1,6-hexanediol diacrylate as a crosslinker and 0.16 pph of Omnirad BDK as a photoinitiator were added and the resulting mixture was thoroughly stirred for 30 minutes to provide liquid precursor LPC-2.

For the core-layer 12 a third alternative liquid precursor LPC-3 was prepared by combining 90 wt. % of isooctyl acrylate and 10 wt. % of acrylic acid with 0.04 pph of Omnirad BDK as a photoinitiator in a glass vessel and stirring for 30 minutes. The mixture was partially polymerized under a nitrogen-rich atmosphere by UV radiation to a degree of polymerization of appr. 8 % and a Brookfield viscosity of appr. 3,000 mPa·s at 25 °C. Subsequent to the curing 0.12 pph of 1,6-hexanediol diacrylate as a crosslinker and 0.16 pph of Omnirad BDK as a photoinitiator were added and the resulting mixture was thoroughly stirred for 30 minutes to provide liquid precursor LPC-3.

The reference liquid precursor LPC-R is identical to the liquid precursor LPC-3 and represents a single layer double-sided pressure-sensitive adhesive material.

The following Table 1 provides an overview on the syrups used in the examples:

**Table 1**

| | ***Liquid precursors for the skin-layer*** | | ***Liquid precursors for the core-layer*** | | | ***Liquid precursor reference*** |
|---|---|---|---|---|---|---|
| | LPS-1 | LPS-2 | LPC-1 | LPC-2 | LPC-3 | LPC-R |
| **IOA [pph]** | 95 | 87,50 | 95 | 92,5 | 90 | 90 |
| **AA [pph]** | **5** | **12,50** | **5** | **7,5** | **10** | 10 |
| **HDDA [pph]** | 0,10 | 0,10 | 0,12 | 0,12 | 0,12 | 0,12 |
| **Omnirad BDK II [pph] (in total)** | 0,20 | 0,20 | 0,20 | 0,20 | 0,20 | 0,20 |

### Coating:

The coating apparatus 1 comprising two coating stations I and II as described above and schematically shown in Fig. 1 was used. For the experiments listed below, the line speed of the coater was set to 0.71 m/min. Tape thickness was about 1.5 mm. The precursor layers were cured in a UV-curing station with a length of 300 cm at the line speed given above. The total radiation intensity irradiated cumulatively from top and bottom and the respective length of the two coating zones was as follows:

| | Zone 1 (length 200 cm) | Zone 2 (length 100 cm) |
|---|---|---|
| Total intensity [mW/cm²] | 2.07 | 4.27 |

For the evaluation of glass transition temperatures, the syrup compositions mentioned above were cured under the same conditions as the double layer films. The values are given in Table 2:

**Table 2**

| | Cured precursors | | | | | |
|---|---|---|---|---|---|---|
| | LPS-1 | LPS-2 | LPC-1 | LPC-2 | LPC-3 | LPC-R |
| Tg [°C] | -27.5 | 5.7 | -27.8 | -11.6 | -2.3 | -2.3 |

### Results:

In the following Table 3, the 90° Peel Adhesion on glass and stainless steel of the different examples are summarized after a dwell time of 72hours at ambient room temperature (23 °C +/-2 °C and 50 % +/- 5 % r.h). Each inventive example hereby had a skin and a core layer of the compositions given above, whereas the thickness of the film was about 1.5 mm (without release liner). The reference example LPC-R was a single layer film of identical thickness. The skin layers of the inventive tapes were adhered to the glass substrate:

**Table 3**

| | Invention | | | | Reference |
|---|---|---|---|---|---|
| Sample | Ex1 ^{(*)} | Ex2 | Ex3 | Ex4 | Ex5 |
| Skin | LPS-1 | LPS-2 | LPS-2 | LPS-2 | --- |
| Core | LPC-3 | LPC-1 | LPC-2 | LPC-3 | LPC-R |
| 90° Peel adhesion on glass [N/cm] | 28,0 | 33,5 | 42,9 | 42,9 | 37,5 |
| 90° Peel adhesion on stainless steel [N/cm] | 28,8 | 34,9 | 43,1 | 41,6 | 35,4 |
| T-Block-Test-Cohesive strength [N/cm²] | 74 | 38 | 56 | 84 | 74 |

| | | | | | |
|---|---|---|---|---|---|
| (*) not according to the invention. | | | | | |

From the examples shown above, Ex.2 suffered from cohesive failure inside the core. All samples revealed a static shear resistance of > 10,000 minutes.

The results show that the Examples Ex. 3 and Ex. 4, both having a softer core and a hard skin layer with 12.5 wt.-% acrylic acid in the skin precursor show the best overall performance regarding tape cohesion and peel adhesion, in particular on glass surfaces.

### List of Reference Numbers

- 1: coating apparatus
- 2: coating knife
- 3: coating knife
- 4: substrate
- 5: downstream direction
- 6: coating chamber
- 7: rolling bead
- 8: release liner
- 9: precursor layer
- 10: precursor layer
- 11: skin layer
- 12: core layer
- 13: assembly
- 14: glass substrate
- 15: polymeric substrate

- I - II: consecutive numbering of coating stations starting from the rolling bead (if present) as the most upstream coating station with the following coating chambers numbered in downstream direction

## Claims

1. A multilayer pressure sensitive adhesive (PSA) film having a first acrylic pressure sensitive adhesive layer and a second acrylic pressure sensitive adhesive layer, **characterized in that** the first pressure sensitive adhesive layer has a glass transition temperature Tg ≥ 0°C, a content of 40 to 90 wt.-% of co-monomer(s) having a Tg of less than 0°C in its homopolymer and a content of a strongly polar acrylate of 10 to 15 wt.-% in its precursor, and the second pressure sensitive adhesive layer has a Tg ≤ 0°C, contains 50 to 97 wt.-% of co-monomer(s) having a Tg of less than 0°C in its homopolymer and contains 0.5 to 10 wt.-% of a strongly polar acrylate in its precursor, wherein the content of the strongly polar acrylate of the precursor of the first pressure sensitive adhesive layer exceeds the content of the strongly polar acrylate of the precursor of the second pressure sensitive adhesive layer by at least 2 wt.-%, wherein the Tg of the first pressure sensitive adhesive layer exceeds the Tg of the second pressure sensitive adhesive layer by at least 5°C, wherein the strongly polar acrylate is chosen from the group comprising acrylic acid, methacrylic acid, itaconic acid, hydroxyalkyl acrylates, or mixtures thereof, wherein the co-monomer(s) are selected from the group consisting of isooctyl acrylate, 2-ethylxhexylacrylate, isononyl acrylate, isodecyl acrylate, decyl acrylate, lauryl acrylate, hexyl acrylate, butyl acrylate, and octadecyl acrylate, or combinations thereof, and wherein the Tg is measured according to the test method described in the experimental section.

2. A continuous self-metered process of forming a multilayer pressure sensitive adhesive film comprising at least two polymer layers with a first acrylic pressure sensitive adhesive layer and a second acrylic pressure sensitive adhesive layer, the process comprising the steps of:
(i) providing a substrate (4);
(ii) providing two or more coating knives (2, 3) which are offset, independently from each other, from said substrate (4) to form a gap normal to the surface of the substrate (4);
(iii) moving the substrate (4) relative to the coating knives (2, 3) in a downstream direction (5),
(iv) providing curable liquid precursors of the polymers to the upstream side of the coating knives (2, 3) thereby coating the two or more precursors through the respective gaps as superimposed layers (9, 10) onto the substrate (4);
(v) optionally providing one or more solid films (8) and applying these essentially simultaneously with the formation of the adjacent lower polymer layer, and
(vi) curing the precursor of the multilayer film thus obtained; wherein a lower layer of a curable liquid precursor is covered by an adjacent upper layer of a curable liquid precursor or a film, respectively,
**characterized in that** the precursor of the first pressure sensitive adhesive layer has a content of 40 to 90 wt.-% of co-monomer(s) having a Tg of less than 0°C in its homopolymer and a content of a strongly polar acrylate of 10 to 15 wt.-%, and the precursor of the second pressure sensitive adhesive layer has a content of 50 to 97 wt.-% of co-monomer(s) having a Tg of less than 0°C in its homopolymer and a content of a strongly polar acrylate of 0.5 to 10 wt.-%, wherein the content of the strongly polar acrylate of the precursor of the first pressure sensitive adhesive layer exceeds the content of the strongly polar acrylate of the precursor of the second pressure sensitive adhesive layer by at least 2 wt.-% and wherein after the curing step (vi) the first pressure sensitive adhesive layer has a glass transition temperature Tg ≥ 0°C and the second pressure sensitive adhesive layer has a Tg ≤ 0°C and the Tg of the first pressure sensitive adhesive layer exceeds the Tg of the second pressure sensitive adhesive layer by at least 5°C, wherein the strongly polar acrylate is chosen from the group comprising acrylic acid, methacrylic acid, itaconic acid, hydroxyalkyl acrylates, or mixtures thereof, wherein the co-monomer(s) are selected from the group consisting of isooctyl acrylate, 2-ethylxhexylacrylate, isononyl acrylate, isodecyl acrylate, decyl acrylate, lauryl acrylate, hexyl acrylate, butyl acrylate, and octadecyl acrylate, or combinations thereof, and wherein the Tg is measured according to the test method described in the experimental section.

3. A pressure sensitive adhesive film obtainable by the process of claim 2.

4. An assembly comprising a substrate having a surface energy of >40 mJ/m² or more, in particular a glass substrate, and a pressure sensitive adhesive film according to claim 1, wherein the pressure sensitive adhesive film is attached to the substrate surface with its first pressure sensitive adhesive layer.

## Patentansprüche

1. Mehrschicht-Haftkleber-Folie (PSA-Folie), die eine erste Schicht Acryl-Haftkleber und eine zweite Schicht Acryl-Haftkleber aufweist, **dadurch gekennzeichnet, dass** die erste Schicht Haftkleber eine Glasübergangstemperatur von Tg ≥ 0 °C, einen Gehalt an Co-Monomer(en) von 40-90 Gew.-% mit einer Tg von weniger als 0 °C in seinem Homopolymer und einen Gehalt an einem stark polaren Acrylat von 10 bis 15 Gew.-% in seinem Vorläufer aufweist, und die zweite Schicht Haftkleber eine Tg ≤ 0 °C, einen Gehalt an Co-Monomer(en) von 50 bis 97 Gew.-% mit einer Tg von weniger als 0 °C in seinem Homopolymer und einen Gehalt an stark polarem Acrylat von 0,5 bis 10 Gew.-% in seinem Vorläufer aufweist, wobei der Gehalt an stark polarem Acrylat des Vorläufers der ersten Schicht Haftkleber um mindestens 2 Gew.-% höher ist als der Gehalt an stark polarem Acrylat des Vorläufers der zweiten Schicht Haftkleber, wobei die Tg der ersten Schicht Haftkleber mindestens 5 °C höher ist als die Tg der zweiten Schicht Haftkleber, wobei das stark polare Acrylat ausgewählt ist aus der Gruppe umfassend Acrylsäure, Methacrylsäure, Itakonsäure, Hydroxyalkylacrylaten, oder Mischungen davon, wobei die Co-Monomer(e) ausgewählt sind aus der Gruppe umfassend Isooctylacrylat, 2-Ethylhexylacrylat, Isononylacrylat, Isodecylacrylat, Decylacrylat, Laurylacrylat, Hexylacrylat, Butylacrylat und Octadecylacrylat, oder Kombinationen davon, und wobei die Tg nach dem im Versuchsabschnitt beschriebenen Prüfverfahren gemessen wird.

2. Kontinuierlicher selbst-gemessener Prozess zum Bilden einer Mehrschicht-Haftkleberfolie, umfassend mindestens zwei Polymerschichten mit einer ersten Schicht Acryl-Haftkleber und einer zweiten Schicht Acryl-Haftkleber, wobei der Prozess folgende Schritte umfasst:
(i) Bereitstellen eines Substrats (4);
(ii) Bereitstellen von zwei oder mehr Beschichtungsmessern (2, 3), die unabhängig voneinander von dem Substrat (4) versetzt sind, um einen Freiraum senkrecht zur Oberfläche des Substrats (4) zu bilden;
(iii) Bewegen des Substrats (4) relativ zu den Beschichtungsmessern (2, 3) in einer stromabwärtigen Richtung (5),
(iv) Bereitstellen von härtbaren, flüssigen Vorläufern der Polymere zur stromaufwärtigen Seite der Beschichtungsmesser (2, 3), wodurch die zwei oder mehr Vorläufer durch die jeweiligen Freiräume als überlagerte Schichten (9, 10) auf das Substrat (4) beschichtet werden;
(v) wahlweise Bereitstellen einer oder mehrerer fester Folien (8) und Anbringen von diesen im Wesentlichen gleichzeitig mit der Bildung der benachbarten unteren Polymerschicht, und
(vi) Härten des Vorläufers der somit erhaltenen Mehrschichtfolie, wobei jeweils eine untere Schicht eines härtbaren, flüssigen Vorläufers durch eine angrenzende obere Schicht eines härtbaren, flüssigen Vorläufers oder einer Folie abgedeckt wird, **dadurch gekennzeichnet, dass** der Vorläufer der ersten Schicht Haftkleber einen Gehalt an Co-Monomer(en) von 40-90 Gew.-% mit einer Tg von weniger als 0 °C in seinem Homopolymer und einen Gehalt an einem stark polaren Acrylat von 10 bis 15 Gew.-% aufweist, und der Vorläufer der zweiten Schicht Haftkleber einen Gehalt an Co-Monomer(en) von 50 bis 97 Gew.-% mit einer Tg von weniger als 0 °C in seinem Homopolymer und einen Gehalt an stark polarem Acrylat von 0,5 bis 10 Gew.-% aufweist, wobei der Gehalt an stark polarem Acrylat des Vorläufers der ersten Schicht Haftkleber um mindestens 2 Gew.-% höher ist als der Gehalt an stark polarem Acrylat des Vorläufers der zweiten Schicht Haftkleber, und wobei nach dem Härtungsschritt (vi) die erste Schicht Haftkleber eine Glasübergangstemperatur von Tg ≥ 0 °C und die zweite Schicht Haftkleber eine Tg ≤ 0 °C aufweist und die Tg der ersten Schicht Haftkleber die Tg der zweiten Schicht Haftkleber um mindestens 5 °C überschreitet, wobei das stark polare Acrylat ausgewählt ist aus der Gruppe umfassend Acrylsäure, Methacrylsäure, Itakonsäure, Hydroxyalkylacrylate oder Mischungen davon, wobei die Co-Monomer(e) ausgewählt sind aus der Gruppe umfassend Isooctylacrylat, 2-Ethylhexylacrylat, Isononylacrylat, Isodecylacrylat, Decylacrylat, Laurylacrylat, Hexylacrylat, Butylacrylat und Octadecylacrylat, oder Kombinationen davon, und wobei die Tg nach dem im Versuchsabschnitt beschriebenen Prüfverfahren gemessen wird.

3. Haftkleberfolie, die durch das Verfahren nach Anspruch 2 herstellbar ist.

4. Anordnung, umfassend ein Substrat, das eine Oberflächenenergie von >40 mJ/m² oder mehr aufweist, insbesondere ein Glassubstrat, und eine Haftkleberfolie nach Anspruch 1, wobei die Haftkleberfolie mit ihrer ersten Haftkleberschicht an der Substratoberfläche befestigt ist.

## Revendications

1. Film adhésif sensible à la pression (PSA) multicouche ayant une première couche d'adhésif sensible à la pression acrylique et une deuxième couche d'adhésif sensible à la pression acrylique, **caractérisé en ce que** la première couche d'adhésif sensible à la pression a une température de transition vitreuse Tg ≥ 0 °C, une teneur de 40 à 90 % en poids en co-monomère(s) ayant une Tg inférieure à 0 °C dans son homopolymère et une teneur en un acrylate fortement polaire de 10 à 15 % en poids dans son précurseur, et la deuxième couche d'adhésif sensible à la pression a une Tg ≤ 0 °C, contient 50 à 97 % en poids de co-monomère(s) ayant une Tg inférieure à 0 °C dans son homopolymère et contient 0,5 à 10 % en poids d'un acrylate fortement polaire dans son précurseur, dans lequel la teneur en acrylate fortement polaire du précurseur de la première couche d'adhésif sensible à la pression dépasse la teneur en acrylate fortement polaire du précurseur de la deuxième couche d'adhésif sensible à la pression d'au moins 2 % en poids, dans lequel la Tg de la première couche d'adhésif sensible à la pression dépasse la Tg de la deuxième couche d'adhésif sensible à la pression d'au moins 5 °C, dans lequel l'acrylate fortement polaire est choisi parmi le groupe comprenant l'acide acrylique, l'acide méthacrylique, l'acide itaconique, des acrylates d'hydroxyalkyle, ou des mélanges de ceux-ci, dans lequel le(s) co-monomère(s) est(sont) choisi(s) dans le groupe constitué de acrylate d'isooctyle, acrylate de 2-éthylxhexyle, acrylate d'isononyle, acrylate d'isodécyle, acrylate de décyle, acrylate de lauryle, acrylate d'hexyle, acrylate de butyle et acrylate d'octadécyle, ou des combinaisons de ceux-ci, et dans lequel la Tg est mesurée selon le procédé de test décrit dans la section expérimentale.

2. Procédé continu automesuré de formation d'un film adhésif sensible à la pression multicouche comprenant au moins deux couches polymères avec une première couche d'adhésif sensible à la pression acrylique et une deuxième couche d'adhésif sensible à la pression acrylique, le procédé comprenant les étapes consistant à :
(i) fournir un substrat (4) ;
(ii) fournir deux lames de revêtement ou plus (2, 3) qui sont décalées, indépendamment l'une de l'autre, dudit substrat (4) pour former un espace perpendiculaire à la surface du substrat (4) ;
(iii) déplacer le substrat (4) par rapport aux lames de revêtement (2, 3) dans une direction en aval (5),
(iv) fournir des précurseurs liquides durcissables des polymères vers le côté en amont des lames de revêtement (2, 3) en revêtant de ce fait les deux précurseurs ou plus à travers les espaces respectifs en tant que couches superposées (9, 10) sur le substrat (4) ;
(v) fournir éventuellement un ou plusieurs films solides (8) et appliquer ceux-ci de façon pratiquement simultanée à la formation de la couche polymère inférieure adjacente, et
(vi) durcir le précurseur du film multicouche ainsi obtenu ; dans lequel une couche inférieure d'un précurseur liquide durcissable est couverte par une couche supérieure adjacente d'un précurseur liquide durcissable ou d'un film, respectivement, **caractérisé en ce que** le précurseur de la première couche d'adhésif sensible à la pression a une teneur de 40 à 90 % en poids en co-monomère(s) ayant une Tg inférieure à 0 °C dans son homopolymère et une teneur en un acrylate fortement polaire de 10 à 15 % en poids, et le précurseur de la deuxième couche d'adhésif sensible à la pression a une teneur de 50 à 97 % en poids en co-monomère(s) ayant une Tg inférieure à 0 °C dans son homopolymère et une teneur en un acrylate fortement polaire de 0,5 à 10 % en poids, dans lequel la teneur en acrylate fortement polaire du précurseur de la première couche d'adhésif sensible à la pression dépasse la teneur en acrylate fortement polaire du précurseur de la deuxième couche d'adhésif sensible à la pression d'au moins 2 % en poids et dans lequel après l'étape de durcissement (vi) la première couche d'adhésif sensible à la pression a une température de transition vitreuse Tg ≥ 0 °C et la deuxième couche d'adhésif sensible à la pression a une Tg ≤ 0 °C, la Tg de la première couche d'adhésif sensible à la pression dépasse la Tg de la deuxième couche d'adhésif sensible à la pression d'au moins 5 °C, dans lequel l'acrylate fortement polaire est choisi parmi le groupe comprenant l'acide acrylique, l'acide méthacrylique, l'acide itaconique, des acrylates d'hydroxyalkyle, ou des mélanges de ceux-ci, dans lequel le(s) co-monomère(s) est(sont) choisi(s) dans le groupe constitué de acrylate d'isooctyle, acrylate de 2-éthylxhexyle, acrylate d'isononyle, acrylate d'isodécyle, acrylate de décyle, acrylate de lauryle, acrylate d'hexyle, acrylate de butyle et acrylate d'octadécyle, ou des combinaisons de ceux-ci, et dans lequel la Tg est mesurée selon le procédé de test décrit dans la section expérimentale.

3. Film adhésif sensible à la pression pouvant être obtenu par le procédé selon la revendication 2.

4. Ensemble comprenant un substrat ayant une énergie de surface de >40 mJ/m² ou plus, en particulier un substrat en verre, et un film adhésif sensible à la pression selon la revendication 1, dans lequel le film adhésif sensible à la pression est fixé à la surface de substrat avec sa première couche d'adhésif sensible à la pression.
